# EUROPÄISCHE PATENTSCHRIFT

(11) **EP 3 801 835 B1**
(45) Veröffentlichungstag und Bekanntmachung des Hinweises auf die Patenterteilung: **06.07.2022**
(21) Anmeldenummer: 19726715.6
(22) Anmeldetag: 31.05.2019
(51) Int. Cl.: B01D 53/14, C10L 3/10

(54) **VORRICHTUNG UND VERFAHREN ZUR HERSTELLUNG EINES ENTSÄUERTEN FLUIDSTROMS**
METHOD AND DEVICE FOR PRODUCING A DE-ACIDIFIED FLUID FLOW
PROCÉDÉ ET DISPOSITIF DE FABRICATION D'UN FLUX FLUIDIQUE DÉSACIDIFIÉ

(30) Priorität: 11.06.2018 EP 18176963; 11.06.2018 EP 18176959
(43) Veröffentlichungstag der Anmeldung: 14.04.2021
(73) Patentinhaber: BASF SE, 67056 Ludwigshafen am Rhein (DE)
(72) Erfinder: SIEDER, Georg, 67056 Ludwigshafen (DE); FERNANDEZ-RODILES, Raquel, Florham Park, 07932 (US); INGRAM, Thomas, 67056 Ludwigshafen (DE)
(74) Vertreter: BASF IP Association
(86) Internationale Anmeldenummer: PCT/EP2019/064163
(87) Internationale Veröffentlichungsnummer: WO 2019/238433

(56) Entgegenhaltungen:
- CA-A- 873 791
- DE-A1-102005 033 837
- RU-C1- 2 602 908

## Beschreibung

Die vorliegende Erfindung betrifft ein Verfahren zur Herstellung eines entsäuerten Fluidstroms, insbesondere zur Herstellung von entsäuertem Erdgas, mit einem geringen Methanolgehalt. Weiterhin betrifft die vorliegende Anmeldung eine Vorrichtung zur Entsäuerung eines Methanolhaltigen Fluidstroms, sowie deren Verwendung.

Die Entfernung der sauren Gase aus Fluidströmen ist aus verschiedenen Gründen wünschenswert.

Erdgas, welches nach der Förderung anfällt, enthält neben Methan verschiedene andere Komponenten, wie weitere Kohlenwasserstoffe, Wasser, sowie saure Gase, wie CO₂, H₂S oder Mercaptane.

Roherdgas muss vor dem Verkauf als sogenanntes Sales Gas oder Verkaufsgas aufgereinigt werden, damit es den Spezifikationen und Anforderungen der Kunden und der Vertriebsgesellschaften genügt.

So muss beispielsweise Wasser aus Erdgas weitestgehend entfernt werden, da es bei ungenügender Trocknung des Erdgases zur Bildung von Methanhydraten kommen kann. Die festen Methanhydrate können zu einem extremen Druckabfall in den Förderleitungen beitragen und die Ventile und Rohrleitungen verstopfen oder sogar beschädigen.

Die Trocknung garantiert auch einen gleichbleibenden Brennwert des Gases bei der Einspeisung in das öffentliche Gasnetz.

Zudem müssen saure Gase, wie CO₂, H₂S und Mercaptane, entfernt werden, da sie korrosiv sind und zu Korrosionsschäden in den Rohrleitungen oder Apparaten der Roherdgas-Aufarbeitungsanlagen führen können. Zudem sind sie, wie CO₂ und H₂S Umweltschadstoffe, die wesentliche Verursacher von sogenannten sauren Regen sind.

Bei der Herstellung von Flüssigerdgas (Liquid Natural Gas = LNG) ist vor der Verflüssigung eine Aufreinigung des Roherdgases notwendig, u.a. muss CO₂ bis auf 50 vppm abgetrennt werden, um nicht in der Verflüssigung als Feststoff auszufallen.

Das Roherdgas durchläuft deshalb in der Regel eine Vielzahl von Reinigungsschritten, bevor es als Verkaufsgas in das Erdgasnetz eingespeist wird.

Üblicherweise wird zunächst ein Großteil des enthaltenen Wassers und Erdgaskondensat abgetrennt. Hierbei wird das Roherdgas in der Regel gekühlt, so dass Wasser und die Bestandteile, die das Erdgaskondensat bilden, wie längerkettige Alkane und Aromate, auskondensieren. Die auskondensierten Flüssigkeiten, d.h. das Erdgaskondensat und Wasser, können vom nichtverflüssigten Erdgas abgetrennt werden. Die Abtrennung von Wasser und Erdgaskondensat erfolgt in der Regel am oder in der Nähe der Förderstätte.

In kälteren Erdregionen wird dem Erdgas vor dem Transport zu einer Erdgas-Verarbeitungsanlage oder auch vor der Entfernung der sauren Gasen üblicherweise Methanol zugesetzt. Methanol wirkt als Inhibitor gegen die Bildung von Methanhydraten im Roherdgas. Die Zugabe von Methanol zum Roherdgas ermöglicht somit den Transport des Roherdgases von der Förderstätte zur Erdgas-Verarbeitungsanlage bei kalten Außentemperaturen.

Die Zugabe von Methanol zum Roherdgas kann aber in den nachfolgenden Aufarbeitungsschritten in einer Erdgas-Verarbeitungsanlage zu Problemen führen.

Eine Erdgas-Verarbeitungsanlage umfasst im Allgemeinen einen oder mehreren der folgenden Schritte:
(i) Entsäuerung;
(ii) Entwässerung;
(iii) Entfernung von Quecksilber;
(iv) Entfernung von Stickstoff;
(v) Entfernung von Erdgaskondensaten; und/oder
(vi) Verflüssigung zur Herstellung von LNG

Im Entsäuerungsschritt (i) wird das Roherdgas im Allgemeinen mit einem Absorptionsmittel in Kontakt gebracht, welches zumindest einen Teil der sauren Gase absorbiert, so dass ein entsäuertes Erdgas und ein mit den sauren Gasen beladenes Absorptionsmittel erhalten wird. Im Entsäuerungsschritt (i) wird das im Roherdgas vorhandene Methanol in der Regel nicht vollständig im Absorptionsmittel co-absorbiert, so dass das entsäuerte Erdgas noch gewisse Restmengen an Methanol enthält, bevor es der Entwässerungsstufe (ii) zugeführt wird. Dies kann insbesondere der Fall sein, wenn das Absorptionsmittel selber Restmengen von Methanol enthält. Restmengen von Methanol können im Absorptionsmittel enthalten sein, wenn regeneriertes Absorptionsmittel zur Entsäuerung eingesetzt wird, aus dem Methanol nicht vollständig entfernt wurde.

Restmengen von Methanol können jedoch in der nachfolgenden Entwässerungsstufe (ii) zu Problemen führen.

Die Entwässerung kann beispielsweise als Druckwechsel-Adsorption (oder Pressure Swing Adsorption (PSA)), bevorzugt als Temperaturwechsel-Adsorption (TSA) oder als GlykolTrocknung ausgestaltet sein.

Ist die Entwässerung (ii) beispielsweise als PSA bzw. TSA ausgestaltet, in der ein Molsieb als festes Trocknungsmittel eingesetzt wird, so muss bei der Anwesenheit von Restmengen an Methanol ein 4 A Molsieb anstelle eines 3 A Molsiebs verwendet werden, wodurch neben Wasser und Methanol auch weitere Komponenten, wie H₂S und Ethan absorbiert werden. Zusätzlich steht die Absorption von Methanol in Konkurrenz zu der bevorzugten Absorption von Wasser. Die Co-Absorption von Methan und anderen Bestandteilen durch Verwendung eines größeren Molsiebs erfordert, dass der Adsorber größer ausgelegt werden muss. Methanol kann darüber hinaus bei der Regeneration der Molsiebs durch Temperaturerhöhung zu einer schnelleren Verkokung des Molsiebes führen.

Sowohl bei einer Adsorptionseinheit auf Basis des PSA- bzw. TSA-Verfahrens, als auch bei einer Entwässerungseinheit auf Basis der sogenannten Glykol-Entwässerung kann es zur Verschleppung von Methanol über mehrere Anlagenteile kommen, da das bei der Regeneration des Trocknungsmittels abgetrennte Wasser zusätzlich Methanol enthält.

Die Anwesenheit von Methanol erfordert im Allgemeinen eine weitere Nachbehandlung des abgetrennten Wassers, bei der Methanol von Wasser abgetrennt wird, um Methanol und/oder Wasser in einer Reinheit zurückzugewinnen, in der die Stoffe wieder als Make-Up-Wasser bzw. Inhibitor wiederverwendet werden können.

Die RU 2602908 offenbart deshalb ein Verfahren zur Entsäuerung von Roherdgas, in dem ein entsäuertes Erdgas mit einem geringen MeOH-Gehalt erhalten wird.

Bei diesem Verfahren wird das MeOH-haltige Roherdgas zunächst in einen Absorber eingeleitet. In dem Absorber wird das MeOH-haltige Roherdgas mit einer wässrigen Aminlösung in Kontakt gebracht. Hierbei wird neben den sauren Gasen, wie CO₂, auch der überwiegende Teil des MeOH absorbiert. In einem Regenerator wird die beladene Aminlösung bei höheren Temperaturen regeneriert, wobei die sauren Gase und MeOH aus der beladenen Aminlösung rausgestrippt werden. Der über den Kopf des Regenerators erhaltene Strom wird einem Kondensator zugeführt, in dem der überwiegende Anteil an Methanol zusammen mit dem Strippdampf auskondensiert wird und von den in der Gasphase verbleibenden sauren Gasen abgetrennt wird. Die RU 2602908 offenbart die weitere Aufarbeitung des MeOH-haltigen Kondensats aus dem Regenerator in einer nachgelagerten Destillationskolonne. In dieser wird das das Regenerator-Kondensat in Methanol (Kopfprodukt) und Wasser (Sumpfprodukt) aufgetrennt. Das Me-OH kann dann erneut als Inhibitor im Roherdgas eingesetzt werden. Das nahezu MeOH-freie Wasser wird in einen Pufferbehälter gefahren und dort mit dem regenerierten Absorptionsmittel zum Ausgleich von Wasserverlusten vermischt und in den Absorber zurückgeführt.

Nachteilig bei dem in der RU 2602908 beschriebenen Verfahren ist, dass bei der Rückführung des Sumpfstroms aus der Methanoldestillation in den Absorber ein nahezu Methanol-freier Sumpfstrom zurückgeführt werden muss, da Restmengen an Methanol im zurückgeführten Absorptionsmittel die Absorption von Methanol im Absorber verringern. Der Methanolgehalt des Sumpfstroms der Methanoldestillation ist beispielsweise abhängig vom Energieeintrag in den Verdampfer, dem Rücklaufverhältnis und der Anzahl der Trennstufen der Kolonne. Ein nahezu Methanol-freier Sumpfstrom kann entweder dadurch erhalten werden, dass die Kolonne bei einer hohen Verdampferleistung betrieben wird, ein hohes Rücklaufverhältnis eingestellt wird und/oder die Kolonne eine hohe Anzahl von Trennstufen aufweist. Dadurch steigen jedoch die Betriebs- und/oder Investitionskosten.

Bei der Herstellung von Synthesegas können sich ähnliche Probleme ergeben. So kann bei der Herstellung von Synthesegas durch Dampfreformierung von Methan Methanol als Nebenprodukt gebildet werden. Im Fluidstrom kann somit neben Wasserstoff und sauren Gasen, wie CO₂ und CO, auch noch Methanol vorhanden sein. Nach der Abtrennung von mindestens eines Teils der sauren Gase durch Sauergaswäsche kann das entsäuerte Synthesegas und/oder der entsäuerte Wasserstoff auch Restmengen von Methanol enthalten. Zusammen mit Wasser, welches im Allgemeinen durch ein wässriges Absorptionsmittel eingetragen werden kann, kann es bei der nachfolgenden Trocknung des Synthesegases und/oder Wasserstoffs ebenfalls zu den oben beschriebenen Problemen kommen.

Die Aufgabe der vorliegenden Erfindung bestand deshalb darin, einen entsäuerten Fluidstrom, insbesondere ein entsäuertes Erdgas, zu erzeugen, welches einen geringen MeOH-Gehalt aufweist, wobei das hierfür erforderliche Herstellverfahren geringere Investitions- und Betriebskosten aufweisen sollte.

Insbesondere sollte durch die vorliegende Erfindung eine hohe Rückgewinnungsquote des als Inhibitor eingesetzten Methanols ermöglicht werden.

Zudem sollte es ermöglicht werden, die Mengen an Bestandteilen des Absorptionsmittels, wie Wasser, die zugeführt werden müssen um eventuelle Verluste im Verfahren auszugleichen, zu verringern. Aus diesen Grund sollte das erfindungsgemäße Verfahren die Rückführung von Strömen aus bestimmten Verfahrensschritte in andere Verfahrensschritte ermöglichen.

Die Aufgabe der vorliegenden Erfindung wurde gelöst durch ein

Verfahren zur Herstellung eines entsäuerten Fluidstroms aus einem Fluidstrom, enthaltend Methanol und mindestens ein saures Gas, umfassend
a) einen Absorptionsschritt, bei dem man den Fluidstrom mit einem Absorptionsmittel in einem Absorber in Kontakt bringt, wobei man ein mit Methanol und sauren Gasen beladenes Absorptionsmittel und einen zumindest teilweise entsäuerten Fluidstrom erhält;
b) einen Regenerationsschritt, bei dem man zumindest ein Teil des aus Schritt a) erhaltenen, beladenen Absorptionsmittel in einem Regenerator regeneriert, wobei man ein zumindest teilweise regeneriertes Absorptionsmittel und einen gasförmigen Strom enthaltend Methanol, Wasser und mindestens ein saures Gas erhält;
c) einen Rückführschritt, bei dem man zumindest einen Teilstrom des regenerierten Absorptionsmittels aus Schritt b) in den Absorptionsschritt a) zurückführt,
d) einem Kondensationsschritt, bei dem man ein Kondensat, enthaltend Methanol und Wasser, aus dem gasförmigen Stroms aus Schritt b) auskondensiert;
e) einem Destillationsschritt, bei dem man zumindest einen Teil des Kondensats aus Schritt d) in eine Destillationskolonne leitet, wobei man einen Kopfstrom, enthaltend Methanol, und einen Sumpfstrom, enthaltend Wasser, erhält;
dadurch gekennzeichnet, dass man zumindest einen Teil des Sumpfstroms aus Schritt e) in den Regenerator zurückführt.

In das erfindungsgemäße Verfahren wird ein Fluidstrom, enthaltend Methanol und mindestens einem sauren Gas eingesetzt.

Die Menge an Methanol im Fluidstrom liegt bevorzugt im Bereich von 50 bis 5000 vppm, besonders bevorzugt 100 bis 1000 vppm und ganz besonders bevorzugt 200 bis 800 vppm.

Das Methanol wird dem Fluidstrom bevorzugt vor Schritt a) zugegeben. Methanol kann aber auch vor Schritt a) als Nebenprodukt bei der Herstellung des Fluidstroms gebildet werden, beispielsweise bei der Dampfreformierung von Methan.

Weiterhin enthält der eingesetzte Fluidstrom mindestens ein saures Gas. Bevorzugt enthält das Roherdgas CO₂ und/oder H₂S. Neben CO₂ und/oder H₂S können andere saure Gase im Roherdgas vorhanden sein, wie COS und Mercaptane. Außerdem können auch SO₃, SO₂, CS₂ und HCN enthalten sein.

Der Gehalt an sauren Gasen im Fluidstrom beträgt im Allgemeinen 0,01 bis 40 Vol.%, bevorzugt 0,05 bis 15 Vol.-% und besonders bevorzugt 0,1 bis 5 Vol.%.

Der in das erfindungsgemäße Verfahren eingesetzte Fluidstrom kann zudem Wasser enthalten.

Der Wassergehalt im Fluidstrom liegt im Allgemeinen in einem Bereich von >0 Vol.-% bis zu einem Gehalt, der der Sättigungskonzentration von Wasser in dem Fluidstrom bei den vorliegenden Druck- und Temperaturbedingungen entspricht.

In einer bevorzugten Ausführungsform enthält der eingesetzte Fluidstrom Kohlenwasserstoffe. Der Kohlenwasserstoffgehalt im Fluidstrom beträgt im Allgemeinen 60 bis 99,9 Vol-%, bevorzugt 85 bis 99,5 Vol.-% und besonders bevorzugt 95 bis 99 Vol.%.

Die im Fluidstrom enthaltenden Kohlenwasserstoffe enthalten bevorzugt 80 bis 100 Vol.-% Methan, besonders bevorzugt 90 bis 99,9 Vol.-% und ganz besonders bevorzugt 95 bis 99 Vol.-% Methan.

Der Fluidstrom kann neben Methan und sauren Gasen weitere Komponenten enthalten, wie andere Gase (N₂ oder He), Quecksilber oder natürlich vorkommenden radioaktiven Substanzen.

Der Anteil an weiteren Komponenten im Fluidstrom beträgt im Allgemeinen 0 bis 4 Vol.-%, bevorzugt 0,0001 bis 3, Vol.-% und ganz besonders bevorzugt 0,0005 bis 1,5 Vol.-%.

Der Fluidstrom kann jeder Fluidstrom sein, der mindestens ein saures Gas und Methanol enthält. Der Fluidstrom ist bevorzugt Roherdgas. Der Fluidstrom kann aber auch ein Synthesegas oder ein Biogas sein, zu welchem Methanol zugegeben wurde oder bei dessen Herstellung Methanol als Nebenprodukt entsteht. Als Roherdgas wird in der Regel ein Roherdgas eingesetzt, von dem Erdgaskondensat und Wasser durch Auskondensation abgetrennt wurden. Die Abtrennung von Erdgaskondensat und Wasser kann nach einem dem Fachmann bekannten Verfahren erfolgen, beispielsweise in dem man die Temperatur des geförderten Roherdgas erniedrigt und die auskondensierten Bestandteile, wie Wasser und das Erdgaskondensat, von den nichtkondensierten Bestandteilen des Roherdgases abtrennt

Bevorzugt wird ein Fluidstrom eingesetzt, welcher einen Gesamtdruck im Bereich von 20 bis 120 bar, besonders bevorzugt 40 bis 100 bar und ganz besonders bevorzugt 50 bis 80 bar aufweist.

### Absorptionsschritt:

Der Fluidstrom wird erfindungsgemäß in einen Absorptionsschritt eingeleitet, bei dem man den Fluidstrom mit einem Absorptionsmittel in einem Absorber in Kontakt bringt, wobei man ein mit Methanol und sauren Gasen beladenes Absorptionsmittel und einen zumindest teilweise entsäuerten Fluidstrom erhält.

### Absorptionsmittel:

Das Absorptionsmittel enthält mindestens ein Amin.

Bevorzugte Amine sind die folgenden:
i) Amine der Formel I:

   NR¹(R²)₂ (I)

   worin R¹ unter C₂-C₆-Hydroxyalkylgruppen, C₁-C₆-Alkoxy-C₂-C₆-alkylgruppen, Hydroxy- C₁-C₆-Alkoxy-C₂-C₆-alkylgruppen und 1-Piperazinyl-C₂-C₆-alkylgruppen ausgewählt ist und R² unabhängig unter H, C₁-C₆-Alkylgruppen und C₂-C₆-Hydroxyalkylgruppen ausgewählt ist;
ii) Amine der Formel II:

   R³R⁴N-X-NR⁵R⁶ (II)

   worin R³, R⁴, R⁵ und R⁶ unabhängig voneinander unter H, C₁-C₆-Alkylgruppen, C₂-C₆- Hydroxyalkylgruppen, C₁-C₆-Alkoxy-C₂-C₆-alkylgruppen und C₂-C₆-Aminoalkylgruppen ausgewählt sind und X für eine C₂-C₆-Alkylengruppe, -X¹-NR⁷-X²- oder -X¹-O-X²- steht, worin X¹ und X² unabhängig voneinander für C₂-C₆-Alkylengruppen stehen und R⁷ für H, eine C₁-C₆-Alkylgruppe, C₂-C₆-Hydroxyalkylgruppe oder C₂-C₆-Aminoalkylgruppe steht;
iii) 5- bis 7-gliedrige gesättigte Heterocyclen mit wenigstens einem Stickstoffatom im Ring, die ein oder zwei weitere, unter Stickstoff und Sauerstoff ausgewählte Heteroatome im Ring enthalten können, und
iv) Gemische davon.

Spezifische Beispiele für bevorzugt einsetzbare Amine sind:
i) 2-Aminoethanol (Monoethanolamin), 2-(Methylamino)ethanol, 2-(Ethylamino)- ethanol, 2-(n-Butylamino)ethanol, 2-Amino-2-methylpropanol, N-(2-Aminoethyl)- piperazin, Methyldiethanolamin, Ethyldiethanolamin, Diemthylaminopropanol, t-Butylaminoethoxyethanol (TBAEE), 2-Amino-2-methylpropanol, Diisoproanolamin (DIPA);
ii) 3-Methylaminopropylamin, Ethylendiamin, Diethylentriamin, Triethylentetramin, 2,2-Dimethyl-1,3-diaminopropan, Hexamethylendiamin, 1,4-Diaminobutan, 3,3- Iminobispropylamin, Tris(2-aminoethyl)amin, Bis(3-dimethylamino-propyl)amin, Tetramethylhexamethylendiamin;
iii) Piperazin, 2-Methylpiperazin, N-Methylpiperazin, 1-Hydroxyethyl-piperazin, 1,4- Bishydroxyethyl-piperazin, 4-Hydroxyethyl-piperidin, Homopiperazin, Piperidin, 2- Hydroxyethyl-piperidin und Morpholin; und
iv) Gemische davon.

In einer bevorzugten Ausführungsform enthält das Absorptionsmittel mindestens eines der Amine Monoethanolamin (MEA), Methylaminopropylamin (MAPA), Piperazin (PIP), Diethanolamin (DEA), Triethanolamin (TEA), Diethylethanolamin (DEEA), Diisopropanolamin (DIPA), Aminoethoxyethanol (AEE), tert.-Butylaminoethoxyethanol (TBAEE Dimethylaminopropanol (DIMAP) und Methyldiethanolamin (MDEA) oder Gemische davon.

Weitere Amine, die in das Verfahren eingesetzt werden können sind tert.-Butylaminopropandiol, tert.-Butylaminoethoxyethylmorpholin, tert.-Butylaminoethylmorpholin, Methoxyethoxyethoxyethyl-tert.-butylamin, tert-butylaminoethylpyrrolidon, Vorzugsweise ist das Amin ein sterisch gehindertes Amin oder ein tertiäres Amin. Ein sterisch gehindertes Amin ist ein sekundäres Amin, in dem der Amin-Stickstoff an mindestens ein sekundäres Kohlenstoffatom und/oder mindestens ein tertiäres Kohlenstoffatom gebunden ist; oder ein primäres Amin, in dem der Amin-Stickstoff an ein tertiäres Kohlenstoffatom gebunden ist. Ein bevorzugtes sterisch gehindertes Amin ist t-Butylaminoethoxyethanol. Ein bevorzugtes tertiäres Amin ist Methyldiethanolamin.

Wird angestrebt das im Fluidstrom enthaltenden CO₂ vollständig oder nahezu vollständig zu entfernen, so enthält das Absorptionsmittel bevorzugt zudem einen Aktivator, wenn das im Absorptionsmittel enthaltende Amin ein sterisch gehindertes Amin oder ein tertiäres Amin ist. Der Aktivator ist im Allgemeinen ein sterisch ungehindertes primäres oder sekundäres Amin. In diesen sterisch ungehinderten Aminen ist der Amin-Stickstoff mindestens einer Aminogruppe nur an primäre Kohlenstoffatome und Wasserstoffatome gebunden. Wird lediglich angestrebt einen Teil der im Fluidstrom enthaltenden Gase zu entfernen, beispielsweise die selektive Entfernung von H₂S aus einem Fluidstrom enthaltend H₂S und CO₂, so enthält das Absorptionsmittel bevorzugt keinen Aktivator.

Das sterisch ungehinderte primäre oder sekundäre Amin welches als Aktivator eingesetzt werden kann ist beispielsweise ausgewählt unter Alkanolaminen, wie Monoethanolamin (MEA), Diethanolamin, (DEA), Ethylaminoethanol, 1-Amino-2-methyl-propan-2-ol, 2-Amino-1-butanol, 2-(2-Aminoethoxy)ethanol und 2-(2-Aminoethoxy)ethanamin, Polyaminen, wie Hexamethylendiamin, 1,4-Diaminobutan, 1,3-Diaminopropan, 3-(Methylamino)propylamin (MAPA), N-(2-Hydroxyethyl)ethylendiamin, 3-(Dimethylamino)propylamin (DMAPA), 3-(Diethylamino)propylamin, N,N'-Bis(2- hydroxyethyl)ethylendiamin, 5-, 6- oder 7-gliedrigen gesättigten Heterocyclen mit wenigstens einer NH-Gruppe im Ring, die ein oder zwei weitere, unter Stickstoff und Sauerstoff ausgewählte Heteroatome im Ring enthalten können, wie Piperazin, 2-Methylpiperazin, N-Methylpiperazin, N-Ethylpiperazin, N-(2-Hydroxyethyl)piperazin, N-(2-Aminoethyl)piperazin, Homopiperazin, Piperidin und Morpholin.

Besonders bevorzugt sind 5-, 6- oder 7-gliedrige gesättigte Heterocyclen mit wenigstens einer NH-Gruppe im Ring, die ein oder zwei weitere, unter Stickstoff und Sauerstoff ausgewählte Heteroatome im Ring enthalten können. Ganz besonders bevorzugt ist Piperazin.

In einer Ausführungsform enthält das Absorptionsmittel das tertiäre Amin Methyldiethanolamin und den Aktivator Piperazin.

Das molare Verhältnis von Aktivator zu sterisch gehindertem Amin oder tertiärem Amin liegt bevorzugt im Bereich von 0,05 bis 1,0, besonders bevorzugt im Bereich von 0,05 bis 0,7. Im Allgemeinen enthält das Absorptionsmittel 10 bis 60 Gew.-% Amin.

Das Absorptionsmittel kann zusätzlich noch physikalische Lösungsmittel enthalten. Geeignete physikalische Lösungsmittel sind beispielsweise N-Methylpyrrolidon, Tetramethylensulfon, Oligoethylenglykoldialkylether wie Oligoethylenglykolmethylisopropylether (SEPASOLV MPE), Oligoethylenglykoldimethylether (SELEXOL). Das physikalische Lösungsmittel ist im Absorptionsmittel im Allgemeinen in Mengen von 1 bis 60 Gew.-%, vorzugsweise 10 bis 50 Gew.-%, insbesondere 20 bis 40 Gew.- %, enthalten.

Das Absorptionsmittel enthält in einer bevorzugten Ausführungsform weniger als 10 Gew.-%, z.B. weniger als 5 Gew.-%, insbesondere weniger als 2 Gew.-% anorganische basische Salze, wie z.B. Kaliumcarbonat.

Das Absorptionsmittel kann auch Additive, wie Korrosionsinhibitoren, Antioxidantien, Enzyme, Antischaummittel etc. enthalten. Im Allgemeinen liegt die Menge an derartigen Additiven im Bereich von etwa 0,01-3 Gew.-% des Absorptionsmittels.

Dem Absorber kann frisches Absorptionsmittel zugeführt werden, oder dem Absorber kann in den Rückführschritt e) regeneriertes Absorptionsmittel zugeführt werden. Die Zuführung von frischem Absorptionsmittel bedeutet, dass die Komponenten des Absorptionsmittels die Schritte b) bis e) noch nicht durchlaufen haben. Die Zuführung von regeneriertem Absorptionsmittel erfordert, dass zumindest ein Teil der Komponenten des Absorptionsmittels die Schritte b) bis e) durchlaufen haben.

Das Absorptionsmittel enthält bevorzugt 0,05 Vol.-% oder weniger Methanol, besonders bevorzugt 0,03 Vol.-% oder weniger Methanol, ganz besonders bevorzugt 0,01 Vol.-% oder weniger Methanol und insbesondere 0,005 Vol.-% oder weniger Methanol.

Das Absorptionsmittel ist vorzugsweise wässrig. D.h. dass die verschiedenen Bestanteile des Absorptionsmittels, wie Amin, Methanol, physikalische Lösungsmittel, Additiven in den oben genannten Mengen mit Wasser vermischt werden.

Ganz besonders bevorzugt wird eine wässrige Lösung von Methyldiethanolamin als Absorptionsmittel eingesetzt.

### Absorber:

Das Inkontaktbringen des Fluidstroms mit dem Absorptionsmittel in Schritt a) erfolgt im einem Absorber.

Der Absorber ist bevorzugt ein Absorptionsturm bzw. eine Absorptionskolonne, z. B. einer Füllkörper-, Packungs- oder Bodenkolonne.

Der Absorber umfasst im Allgemeinen eine Absorptionszone und optional eine Rückwaschzone.

### Absorptionszone:

Als Absorptionszone wird die Sektion der Absorptionskolonne angesehen, in der der Fluidstrom in Stoffaustausch-Kontakt mit dem Absorptionsmittel kommt.

Das Inkontaktbringen des Fluidstroms mit dem Absorptionsmittel in der Absorptionszone erfolgt vorzugsweise im Gegenstrom.

Zur Verbesserung des Kontakts mit dem Absorptionsmittel und Schaffung einer großen Stoffaustauschgrenzfläche enthält die Absorptionszone in der Regel Einbauten, z.B. Füllkörper, Packungen und/oder Böden, wie Ventil-, Glocken-, Thormann- oder Siebböden.

Enthält die Absorptionszone Füllkörper oder Packungen, liegt die Höhe der Füllkörper/Packungen der Absorptionszone bevorzugt im Bereich von 5 bis 20 m, besonders bevorzugt im Bereich von 6 bis 15 m und ganz besonders bevorzugt im Bereich von 8 bis14 m. Enthält die Absorptionszone Böden, so liegt die Bodenanzahl der Absorptionszone vorzugsweise im Bereich von 8 bis 30, besonders bevorzugt 12 bis 25 und ganz besonders bevorzugt 15 bis 23 Böden.

Bei Füllkörper- bzw. Packungskolonnen kann die Absorptionszone in ein oder mehrere Abschnitte, bevorzugt 2 bis 4 Abschnitte, unterteilt sein. Zwischen den einzelnen Abschnitten der Absorptionszone können Trag- und Halteböden und/oder Verteilerböden angeordnet sein, die die Verteilung des Absorptionsmittels über den gesamten Kolonnenquerschnitt verbessern.

Die Temperatur des in die Absorptionszone eingeführten Absorptionsmittels beträgt im Allgemeinen etwa 0 bis 60°C, bevorzugt 10 bis 50°C und besonders bevorzugt 25 bis 50°C.

Der Druck im Absorber liegt üblicherweise im Bereich von 30 bis 120 bar, besonders bevorzugt 40 bis 100 bar und ganz besonders bevorzugt 50 bis 80 bar aufweist.

Die Zulaufstelle für den eingeleiteten Fluidstrom befindet sich bevorzugt unterhalb oder im unteren Bereich der Absorptionszone. Vorzugsweise erfolgt der Zulauf über einen Gasverteiler.

Der Absorber kann ein oder mehrere Zulaufstellen für das eingeleitete Absorptionsmittel umfassen. So kann der Absorber eine Zulaufstelle für frisches Absorptionsmittel und eine Zulaufstelle für regeneriertes Absorptionsmittel umfassen. Frisches und regeneriertes Absorptionsmittel können aber auch gemeinsam über eine Zulaufstelle in den Absorber zugeführt werden. Die eine oder mehreren Zulaufstellen befinden sich bevorzugt oberhalb oder im oberen Bereich der Absorptionszone. Über die Zulaufstelle für frisches Absorptionsmittel können auch einzelne Bestandteile des Absorptionsmittels, wie Make-Up-Wasser, zugeführt werden.

Weist der Absorber eine optionale Rückwaschzone auf, so erfolgt der Zulauf bevorzugt zwischen der Absorberzone und der Rückwaschzone.

Durch das Inkontaktbringen des Fluidstroms mit dem Absorptionsmittel in der Absorptionszone wird ein zumindest teilweise entsäuerter Fluidstrom und ein mit MeOH und sauren Gasen beladenes Absorptionsmittel erhalten.

Im oberen Bereich des Absorbers befindet sich in der Regel eine Abzugsstelle für den entsäuerten Fluidstrom. Im Bereich der Abzugsstelle kann ein Demister angebracht sein, um eventuelle Flüssigkeitsreste des Absorptionsmittels oder des Waschmittels aus dem austretenden Fluidstrom abzuscheiden.

Im unteren Bereich des Absorbers, vorzugsweise am Sumpf, befindet sich im Allgemeinen eine Abzugsstelle für das beladene Absorptionsmittel.

Der zumindest teilweise entsäuerte Fluidstrom kann in der Absorptionszone optional mit einer Waschflüssigkeit in Kontakt gebracht werden.

Die Zulaufstelle für das Waschmittel befindet sich bevorzugt im oberen Bereich oder oberhalb der Absorptionszone.

Besonders bevorzugt ist die Waschflüssigkeit eine wässrige Flüssigkeit. Es kann sich bei der Waschflüssigkeit um eine dem Verfahren intrinsische Flüssigkeit handeln, d.h. eine wässrige Flüssigkeit, die an anderer Stelle des Verfahrens anfällt, oder um von außen zugeführte wässrige Flüssigkeiten. Vorzugsweise umfasst die Waschflüssigkeit ein bei einer stromabwärts erfolgenden Kühlung des entsäuerten Fluidstroms gebildetes Kondensat (sogenanntes Absorberkopfkondensat) und/oder Frischwasser.

Durch das Inkontaktbringen des zumindest teilweise entsäuerten Fluidstrom mit einer Waschflüssigkeit können mitgeführte Absorptionmittelbestandteile, wie Amine, ausgewaschen werden. Durch das Inkontaktbringen mit einer wässrigen Waschflüssigkeit kann zudem die Wasserbilanz des Verfahrens ausgeglichen werden, wenn über die austretenden Ströme mehr Wasser ausgetragen wird, als über die eintretenden Ströme eingetragen wird.

### Rückwaschzone:

Optional kann der Absorber eine sogenannte Rückwaschzone aufweisen. In der Rückwaschzone wird dem entsäuerten Fluidstrom im Allgemeinen eine Waschflüssigkeit im Gegenstrom entgegengeführt.

Die Rückwaschzone ist in der Regel eine Sektion des Absorbers, der sich oberhalb der Einspeisestelle des Absorptionsmittels befindet.

Vorzugsweise weist die Rückwaschzone Füllkörper, Packungen und/oder Böden auf, um den Kontakt des Fluidstrom mit der Waschflüssigkeit zu intensivieren. Besonders weist die Rückwaschzone Böden, insbesondere Ventil-, Glocken-, Thormann- oder Siebböden auf.

Die Rückwaschzone umfasst bevorzugt 1 bis 7, besonders bevorzugt 2 bis 6, und ganz besonders bevorzugt 3 bis 5 Böden, oder eine Packungshöhe (Füllkörper/Packungen) von bevorzugt 1 bis 6 m, besonders bevorzugt 2 bis 5 und ganz besonders bevorzugt 2 bis 3 m.

Die Waschflüssigkeit wird im Allgemeinen oberhalb der Rückwaschzone oder in den oberen Bereich der Rückwaschzone eingeleitet. Als Waschflüssigkeit können die voranstehend genannten Waschflüssigkeiten eingesetzt werden.

Man kann die Waschflüssigkeit über die Rückwaschzone recyclieren. Die Waschflüssigkeit wird hierzu unterhalb der Rückwaschzone, z. B. mittels eines geeigneten Sammelbodens, gesammelt und über eine Pumpe zum oberen Ende der Rückwaschzone gepumpt. Man kann die recyclierte Waschflüssigkeit kühlen, vorzugsweise auf eine Temperatur von 20 bis 70 °C, insbesondere 30 bis 60 °C. Hierzu wird die Waschflüssigkeit zweckmäßigerweise über einen Kühler umgepumpt. Um eine Akkumulation ausgewaschener Absorptionsmittelbestandteile in der Waschflüssigkeit zu vermeiden, wird vorzugsweise ein Teilstrom der Waschflüssigkeit aus der Rückwaschzone ausgeleitet.

### Spezifikation des entsäuerten Fluidstroms:

Der entsäuerte Fluidstrom wird, wie voranstehend beschrieben, vorzugsweise über einen Abzug im oberen Teil des Absorbers abgezogen.

Optional kann der entsäuerte Fluidstrom über einen Kondensator geleitet werden.

Als Kondensator können beispielsweise Kondensatoren mit Kühlschlange oder Wendelrohr, Plattenwärmetausche, Doppelrohrkühler sowie Rohrbündelwärmetauscher eingesetzt werden. Der Kondensator wird im Allgemeinen bei einer Temperatur im Bereich von 10 bis 60°C, bevorzugt 20 bis 50 °C, besonders bevorzugt 20 bis 30 °C betrieben.

Der entsäuerte Fluidstrom, der in Schritt a) erhalten wird, enthält bevorzugt 0,01 bis 10 vppm Methanol, besonders bevorzugt 0,05 bis 5 vppm Methanol, und ganz besonders bevorzugt 0,1 bis 3 vppm Methanol.

Der Wassergehalt des entsäuerten Fluidstrom, liegt im Allgemeinen bei 80 - 100 % der Sättigungskonzentration von Wasser in dem Fluidstrom bei den vorliegenden Druck- und Temperaturbedingungen.

Soll der entsäuerte Fluidstrom als Verkaufsgas (Sales Gas) verwendet werden, so beträgt der Gehalt an H₂S im entsäuerten Fluidstrom vorzugsweise 5 vppm oder weniger und der CO₂-Gehalt 2 Vol.-% und weniger.

Soll der entsäuerte Fluidstrom zu LNG verflüssigt werden, so beträgt der CO₂-Gehalt im entsäuerten Fluidstrom vorzugsweise 100 vppm und weniger und besonders bevorzugt 50 vppm und weniger. Der H₂S-Gehalt im entsäuerten Fluidstrom beträgt bei LNG vorzugsweise 5 vppm und weniger und besonders bevorzugt 2 vppm und weniger.

### Weitere Verarbeitung:

An dem entsäuerten Fluidstrom, der in Schritt a) erhalten wird, werden optional im Anschluss ein oder mehrere der folgenden Aufarbeitungsschritte durchgeführt:
aa) Wasserentfernung;
bb) Entfernung von Quecksilber;
cc) Entfernung von Stickstoff;
dd) Entfernung von Erdgaskondensaten; und/oder
ee) Verflüssigung (LNG)

Die Wasserentfernung aa) wird vorzugsweise als Druckwechsel-Adsorption (oder Pressure Swing Adsoprtion (PSA)) und besonders bevorzugt als Temperaturwechsel-Adsorption (oder Temperature Swing Adsorption (TSA)) oder als Glykol-Trocknung durchgeführt.

Die PSA bzw. TSA kann gemäß dem Fachmann bekannten Verfahren eingesetzt werden. Gängige Durchführungsvarianten sind beispielsweise im Nag, Ashis, "Destillation and Hydrocarbon Processing Practices", PennWell 2016, ISBN 978-1-59370-343-1 oder in A. Terrigeol, GPA Europe, Annual Conference, Berlin, Germany, 23rd-25th May, 2012 (https://www.cecachemicals.com/export/sites/ceca/.content/medias/downloads/products/dtm/mo lecular-sieves-contaminants-effects-consequences-and-mitigation.pdf) beschrieben.

Bei der PSA bzw. TSA wird vorzugsweise ein Zeolith, Aktivkohle oder Molsieb eingesetzt. Bevorzugt wird in der PSA bzw. TSA ein Molsieb als festes Adsorptionsmittel eingesetzt.

In der Glykol-Trocknung wird bevorzugt ein flüssiges Absorptionsmittel, wie Monoethylenglykol (MEG), Diethylenglykol (DEG), Triethylenglykol (TEG) oder Tetraethylenglykol (TREG) eingesetzt. Insbesondere bevorzugt wird TEG als flüssiges Absorptionsmittel eingesetzt.

Die Glykol-Trocknung kann gemäß dem Fachmann bekannten Verfahrensvarianten durchgeführt werden. Beispiele für eine Glykol-Trocknung findet sich beispielsweise ebenfalls in Nag, Ashis""Destillation and Hydrocarbon Processing Practices", PennWell 2016, ISBN 978-1-59370-343-1.

Im Anschluss an die Trocknung aa) können optional weitere Aufarbeitungsschritte, wie bb) Quecksilber-Entfernung, cc) Entfernung von Stickstoff, dd) Entfernung von Erdgaskondensaten und ee) eine Verflüssigung von Erdgas zu LNG durchgeführt werden. Einzelheiten zu den genannten Verfahrensschritten finden sich ebenfalls in Nag, Ashis "Hydrocarbon Processing Practices".

Durch die ein oder mehreren Reinigungsschritte aa) bis dd) erhält man in der Regel einen Fluidstrom, der die Spezifikationen von Endkunden und/oder Vertriebsgesellschaften erfüllt und im Falle von Erdgas als sogenanntes Sales Gas verkauft werden kann bzw. in einem weiteren Verflüssigungsschritt ee) zu LNG verflüssigt werden kann.

### Beladenes Absorptionsmittel:

In Schritt a) wird zudem ein mit Sauergasen beladenes Absorptionsmittel erhalten.

Das beladene Absorptionsmittel kann direkt dem Regenerationsschritt b) zugeführt werden.

### Entspannungsschritt (optional):

In einer besonderen Ausführungsform des erfindungsgemäßen Verfahrens wird an dem beladenen Absorptionsmittel vor dem Einleiten in den Regenerationsschritt b) zunächst ein Entspannungsschritt durchgeführt werden.

In dem Entspannungsschritt wird das beladene Adsorptionsmittel im Allgemeinen in einen Entspannungsbehälter geleitet.

Hierzu wird in der Regel das am Boden des Absorbers entnommene beladene Adsorptionsmittel über ein Drosselventil entspannt.

Bevorzugt wird das beladene Adsorptionsmittel auf einen Druck von 3 bis 15 bar, bevorzugt 4 bis 12 und besonders bevorzugt 5 bis 10 bar entspannt.

Die Entspannung führt in der Regel zur Desorption von co-absorbierten Kohlenwasserstoffen, , die in die Gassphase übergehen (sogenanntes Flash-Gas). Das Flash-Gas kann mittels eines Kompressors zurück in die Absorption geführt werden oder vor Ort als zur Energieerzeugung verbrannt oder abgefackelt werden.

Der Entspannungsbehälter ist in der Regel ein Behälter, der frei von besonderen Einbauten ist. Bevorzugt ist der Entspannungsbehälter eine sogenannte Flash-Drum. Als Entspannungsbehälter kommen aber auch Kolonnen mit Einbauten, z.B. Füllkörper, Packungen oder Böden, in Betracht.

Beim Entspannen wird eine gasförmige Phase erhalten (Flash-Gas).

Im oberen Bereich des Entspannungsbehälters befindet sich in der Regel ein Gasabzug für die in die Gasphase überführten Gase. Im Bereich des Gasabzugs kann wiederum bevorzugt ein Demister angeordnet sein. Im Bedarfsfall kann aus dem Flash-Gas in einer weiteren Absorptionskolonne die enthaltenen Sauergase abgetrennt werden. Typischerweise wird hierzu ein Teilstrom des regenerierten Lösungsmittels der zusätzlichen Absorptionskolonne zugeführt. Am Boden des Entspannungsbehälters wird im Allgemeinen das zumindest teilweise mit den sauren Gasen beladene Absorptionsmittel, die nicht in die Gasphase überführt wurden, abgezogen und in der Regel in den Schritt b) geleitet.

### Regenerationsschritt:

Das zumindest teilweise mit sauren Gasen beladene Adsorptionsmittel wird erfindungsgemäß in den Regenerationsschritt b) geleitet.

In dem Regenerationsschritt wird zumindest ein Teil des aus Schritt a) erhaltenen, beladenen Absorptionsmittels in einem Regenerator regeneriert, wobei man ein zumindest teilweise regeneriertes Absorptionsmittel und einen gasförmigen Strom, enthaltend Methanol, Wasser und mindestens ein saures Gas erhält.

Vor dem Einleiten in den Regenerationsschritt b) wird das zumindest teilweise mit sauren Gasen beladene Adsorptionsmittel bevorzugt über einen Wärmetauscher geleitet.

In dem Wärmetauscher wird das zumindest teilweise mit sauren Gasen beladene Absorptionsmittel bevorzugt auf eine Temperatur im Bereich von 50 bis 150°C, besonders bevorzugt 70 bis 130°C und ganz besonders bevorzugt 80 bis 110°C erwärmt.

In einer besonderen Ausführungsform wird in dem Wärmetauscher das aus dem Sumpf des Regenerators abgezogene regenerierte Absorptionsmittel als Heizmedium verwendet. Diese Ausführungsform hat den Vorteil, dass die Wärmeenergie des regenerierten Absorptionsmittels aus Stufe b) zum Aufheizen des beladenen Absorptionsmittels verwendet werden kann. Hierdurch können die Energiekosten des Gesamtverfahrens weiter verringert werden.

### Regenerator:

Erfindungsgemäß wird der Regenerationsschritt in einem Regenerator durchgeführt.

Der Regenerator ist in der Regel als Stripkolonne ausgestaltet.

Der Regenerator umfasst vorzugsweise eine Regenerationszone, einen Verdampfer und optional eine Rückwaschzone.

Der Regenerator wird vorzugsweise bei einem Kopfdruck im Bereich von 1 bis 5 bar, bevorzugt 1,2 bis 4 und besonders bevorzugt 1,3 bis 2,5 bar betrieben.

Im Sumpf des Regenerators ist im Allgemeinen ein Flüssigkeitsabzug für das regenerierte Lösungsmittel angeordnet.

Am Kopf des Regenerators befindet sich in der Regel ein Gasabzug für den gasförmigen Strom. Im Bereich des Gasabzugs ist vorzugsweise ein Demister angebracht.

Der gasförmige Strom wird erfindungsgemäß in einen Kondensationsschritt d) geleitet, wie nachfolgend beschrieben.

### Regenerationszone:

Der Regenerator weist im Allgemeinen eine oberhalb des Sumpfs angeordnete Regenerationszone auf. Vorliegend wird als Regenerationszone der Bereich des Regenerators angesehen, mit dem das beladene Absorptionsmittel in Kontakt mit dem Dampf kommt, der vom Sumpfverdampfer erzeugt wird.

Zur Verbesserung des Kontakts und Schaffung einer großen Stoffaustauschgrenzfläche enthält die Regenerationszone in der Regel Einbauten, z.B. Füllkörper, Packungen und/oder Böden, wie Ventil-, Glocken-, Thormann- oder Siebböden.

Enthält die Regenerationszone Packungen oder Füllkörper, liegt die Höhe der Packungen/Füllkörper in der Regenerationszone bevorzugt im Bereich von 5 bis 15 m, besonders bevorzugt im Bereich von 6 bis 12 m und ganz besonders bevorzugt im Bereich von 8 bis 12 m. Enthält die Regenerationszone Böden, so liegt die Bodenanzahl der Regenerationszone vorzugsweise im Bereich von 10 bis 30, besonders bevorzugt 15 bis 25 und ganz besonders bevorzugt 17 bis 23 Böden.

Bei Füllkörper- bzw. Packungskolonnen kann die Regenerationszone wiederum in mehrere Abschnitte, vorzugsweise 2 bis 4, unterteilt werden. Zwischen den Abschnitten der Regenerationszone können Trag- und Halterböden und/oder Verteilerböden angeordnet sein, die Verteilung von Flüssigkeit über den gesamten Querschnitt des Regenerators verbessern.

In der Regel leitet man das beladene Absorptionsmittel vorzugsweise in den oberen Bereich bzw. oberhalb der in den Regenerator ein. Weist der Regenerator eine zusätzliche Rückwaschzone auf, wie nachfolgend beschrieben, so leitet man das beladene Absorptionsmittel bevorzugt zwischen Regenerationszone und Rückwaschzone in den Regenerator ein.

Dem durch die Regenerationszone nach unten strömenden Absorptionsmittel wird im Allgemeinen in der Regenerationszone der im Verdampfer erzeugte Dampf entgegengeführt.

Der gasförmige Strom kann in der Regenerationszone mit einer Waschflüssigkeit in Kontakt gebracht werden.

Weist der Regenerator keine Waschzone auf, so befindet sich die Zulaufstelle für das Waschmittel bevorzugt im oberen Bereich oder oberhalb der Regenerationszone.

Besonders bevorzugt ist die Waschflüssigkeit eine wässrige Flüssigkeit, wie Frischwasser oder eine wässrige Flüssigkeit, die an einer anderen Stelle des Verfahrens anfällt.

Die Temperatur der Waschflüssigkeit liegt in der Regel im Bereich von 20 bis 60°C, bevorzugt im Bereich von 30 bis 55°C und besonders bevorzugt 30 bis 40°C.

In einer bevorzugten Ausführungsform wird ein Teil des Kondensats aus Stufe d) als Waschflüssigkeit eingesetzt,
In einer besonders bevorzugten Ausführungsform ist zumindest ein Teil der Waschflüssigkeit des Sumpfstroms aus Schritt e).

Besonders bevorzugt besteht die Waschflüssigkeit ausschließlich aus dem Sumpfstrom aus Schritt e).

### Sumpf:

Die Zone des Regenerators unterhalb der Regenerationszone wird im Allgemeinen als Sumpf bezeichnet.

In diesem Bereich wird das regenerierte Absorptionsmittel üblicherweise gesammelt und über einen Flüssigkeitsabzug im unteren Bereich des Regenerators über Rohleitungen dem Verdampfer zugeführt und/oder teilweise als regeneriertes Absorptionsmittel in den Absorber zurückgeführt.

Der Sumpf kann durch einen Sammelboden unterteilt sein, der zwischen dem Sumpfabzug und der Einspeisestelle für den im Verdampfer erzeugten Dampf angeordnet ist.

### Verdampfer:

Im Allgemeinen wird zumindest ein Teil des regenerierten Absorptionsmittels aus dem Sumpfabzug des Regenerators in einen Verdampfer geleitet.

Bevorzugt wird der Sumpfabzug aus dem Regenerator vollständig in den Verdampfer geleitet. Bei dem Verdampfer handelt es üblicherweise um einen Aufkocher (Kesselverdampfer), Naturumlaufverdampfer (Thermosiphon) oder Zwangsumlaufverdampfer.

Der Verdampfer des Regenerators ist vorzugsweise außerhalb des Regenerators angeordnet und über Rohrleitungen mit dem Sumpfabzug verbunden.

Der Verdampfer wird im Allgemeinen bei Temperaturen im Bereich von 100 bis 150°C, vorzugsweise 105 bis 140°C und ganz besonders bevorzugt 110 bis 130°C betrieben.

Im Verdampfer wird im Allgemeinen zumindest ein Teil des Sumpfabzugs verdampft und in den Regenerator zurückgeführt. Die Einspeisung des erzeugten Dampfs und nicht verdampfter Flüssigkeit erfolgt bevorzugt unterhalb der Regenerationszone, bevorzugt in den Sumpf des Regenerators.

Wenn im Sumpf ein zusätzlicher Sammelboden angeordnet ist, so wird erfolgt die Einspeisung des erzeugten Dampfes bevorzugt unterhalb des Sammelbodens.

### Rückwaschzone:

In einer besonderen Ausführungsform weist der Regenerator oberhalb der Regenerationszone, insbesondere bevorzugt oberhalb der Zulaufstelle für das beladene Absorptionsmittel, eine Rückwaschzone auf.

Die Rückwaschzone ist im Allgemeinen als eine oberhalb der Regenerationszone angeordnete Sektion des Regenerators ausgebildet.

Vorzugsweise weist die Rückwaschzone Einbauten, insbesondere Füllkörper, Packungen und/oder Böden auf, um den Kontakt des Fluidstrom mit der Waschflüssigkeit zu intensivieren.

In einer bevorzugten Ausführungsform sind die Einbauten Füllkörper und/oder Packungen. Die Packungshöe (Füllkörper/Packung) liegt vorzugsweise in einem Bereich von 1 bis 10, besonders bevorzugt 2 bis 8 und ganz besonders bevorzugt 3 bis 6 m.

In einer ganz besonders bevorzugten Ausführungsform weist die Rückwaschzone Böden, insbesondere Ventilböden oder Glockenboden, auf.

Bevorzugt weist die Waschsektion 1 bis 10, besonders bevorzugt 2 bis 7 und, ganz besonders bevorzugt 2 bis 6 Böden auf.

In den oberen Bereich der Rückwaschzone oder oberhalb der Rückwaschzone wird im Allgemeinen eine Waschflüssigkeit eingeleitet.

Als Waschflüssigkeit wird in der Regel eine wässrige oder eine leicht saure, wässrige Lösung, insbesondere Wasser, verwendet.

In einer besonders bevorzugten Ausführungsform ist zumindest ein Teil der Waschflüssigkeit des Sumpfstroms aus Schritt e). Besonders bevorzugt besteht die Waschflüssigkeit ausschließlich aus dem Sumpfstrom aus Schritt e).

In einer weiteren Ausführungsform kann ein Teil des Kondensats aus Schritt d) in die Rückwaschzone als Waschflüssigkeit geleitet werden.

Die Temperatur der Waschflüssigkeit liegt in der Regel im Bereich von 10 bis 60°C, bevorzugt im Bereich von 20 bis 55°C und besonders bevorzugt 40 bis 50°C.

In der Rückwaschzone können mitgeschleppte Restmengen an Aminen aus dem Absorptionsmittel ausgewaschen werden, so dass das den Regenerator verlassene saure Abgas im Wesentlichen frei von Aminen ist. In der Rückwaschzone kann zudem der Wassergehalt des Gasstroms, welcher am Kopf des Regenerators erhalten wird, verringert werden, da durch den Kontakt mit dem kälteren Waschmittel ein Teil des dampfförmigen Wassers kondensieren kann. Dies hat den Vorteil, dass dieses Wasser nicht im nachfolgenden Destillationsschritt abgetrennt werden muss.

### Rückführschritt c):

Erfindungsgemäß wird das am Sumpf des Regenerators erhaltene regenerierte Absorptionsmittel aus Schritt b) in den Absorptionsschritt a) zurückgeführt.

Die Rückführung des regenerierten Absorptionsmittels erfolgt dabei, wie voranstehend beschrieben, in einer der Zulaufstellen des Absorbers für das regenerierte Absorptionsmittel.

### Kondensationsschritt d):

Erfindungsgemäß wird der gasförmige Strom aus dem Regenerator in einen Kondensationsschritt d) eingeleitet.

In dem Kondensationsschritt wird ein Kondensat, enthaltend Methanol und Wasser, aus dem gasförmigen Strom aus Schritt b) auskondensiert.

Der Kondensationsschritt wird bevorzugt so durchgeführt, dass der gasförmige Strom aus Stufe b) über ein oder mehrere Kondensatoren (Regenerator-Kopfkondensatoren) geleitet wird.

In einer bevorzugten Ausführungsform wird der gasförmige Strom aus Stufe b) über einen Regenerator-Kopfkondensator geleitet.

Der Kopfkondensator umfasst in der Regel einen Wärmetauscher und einen Behälter in dem die Flüssigphase von der Gasphase getrennt werden kann. Wärmetauscher und Behälter können jedoch auch in einem Bauteil integriert sein.

Der Regenerator-Kopfkondensator wird im Allgemeinen so betrieben, dass Wasser und Methanol kondensieren, während die sauren Gase überwiegend in der Gasphase verbleiben.

Als Regenerator-Kopfkondensator können beispielsweise Kondensatoren mit Kühlschlange oder Wendelrohr, Doppelrohrkühler sowie Rohrbündelwärmetauscher eingesetzt werden.

Der Regenerator-Kopfkondensator wird im Allgemeinen bei einer Temperatur im Bereich von 10 bis 60°C, bevorzugt 20 bis 55 °C, besonders bevorzugt 30 bis 40 °C betrieben.

In einer weiteren bevorzugten Ausführungsform wird der gasförmige Strom aus Stufe b) über zwei Regenerator-Kopfkondensatoren geleitet.

Vorzugsweise wird der erste zwei Regenerator-Kopfkondensator mit Luft oder Kühlwasser gekühlt wird und der zweite zwei Regenerator-Kopfkondensator mit einem Kühlmittel gekühlt. Der erste Regenerator-Kopfkondensator wird im Allgemeinen bei einer Temperatur im Bereich von 20 bis 60°C und bevorzugt 25 bis 45 °C betrieben.

Der zweite Regenerator-Kopfkondensator wird im Allgemeinen mit einem Kühlmittel bei einer Temperatur im Bereich von 3 bis 20°C, bevorzugt 5 bis 15 °C, besonders bevorzugt 5 bis 10 °C betrieben.

Die Ausführungsform mit mindestens zwei Kopfkondensatoren hat weiterhin den Vorteil, dass der Gehalt von Methanol im sauren Abgas verringert werden kann, da bei tieferen Temperaturen mehr Methanol auskondensiert werden kann. Dadurch kann die Methanol-Rückgewinnungsquote erhöht werden, beispielsweise auf mehr als 80%, bezogen auf das in das Verfahren eingebrachte Methanol. Zudem kann die Reinheit des anfallenden Methanols erhöht werden.

Die nicht auskondensierte Gasphase wird bevorzugt als Abgas aus dem Verfahren ausgeschleust.

Erfindungsgemäß wird zumindest ein Teil des Regenerator-Kopfkondensats in den Destillationsschritt e) geleitet. Hierbei ist es bevorzugt, dass bei Einsatz von mehreren Kondensatoren die Kondensate vor dem Einleiten in die Stufe e) zusammengeführt werden.

Vorzugsweise werden 50 bis 100 Vol.%, bevorzugt 70 bis 100 Vol.-%, besonders bevorzugt 90 bis 100 Vol.-% des Regenerator-Kopfkondensats und ganz besonders bevorzugt 100 Vol.% in den Destillationsschritt e) geleitet.

Das nicht in den Schritt e) eingeleitete Kopfkondensat kann als Waschflüssigkeit in den Regenerator zurückgeführt werden.

Dabei kann die Rückführung des Kopfkondensats in den Regenerator vorzugsweise zusammen mit dem Sumpfstrom aus Stufe e) in den Regenerator erfolgen.

### Destillationsschritt e):

Erfindungsgemäß erfolgt nach dem Kondensationsschritt d) ein Destillationsschritt e) bei dem man zumindest einen Teil des Kondensats aus Schritt d) in eine Destillationskolonne leitet, wobei man einen Kopfstrom, enthaltend Methanol, und einen Sumpfstrom, enthaltend Wasser, erhält.

Der Destillationsschritt e) wird im Allgemeinen in einer Rektifikationskolonne durchgeführt.

Die Rektifikation kann in dem Fachmann bekannten Apparaturen, wie Glockenboden-, Siebbodenkolonnen oder Kolonnen mit Füllkörpern oder strukturierten Packungen erfolgen

Die Rektifikationskolonne enthält bevorzugt 3 bis 25 Trennstufen, besonders bevorzugt 5 bis 20 Trennstufen und ganz besonders bevorzugt 7 bis 15 Trennstufen.

Der Eintrag in die Rektifikationskolonne wird vorzugsweise in einem räumlichen Bereich zwischen 25% und 95%der Trennstufen der Rektifikationskolonne zugeführt (von unten gezählt), besonders bevorzugt in einem räumlichen Bereich zwischen 40% und 60% der Trennstufen der Rektifikationskolonne. Beispielsweise kann die im Bereich der Mitte der Trennstufen erfolgen.

Die für die Rektifikation erforderliche Energie wird üblicherweise durch einen Verdampfer im Kolonnensumpf eingetragen. Dabei handelt es sich bei dem Verdampfer üblicherweise um einen Aufkocher, Naturumlaufverdampfer oder Zwangsumlaufverdampfer.

In der bevorzugten Ausführungsform liegt deshalb der absolute Druck am Kopf der Rektifikationskolonne bevorzugt im Bereich von 1 bis 5 bar, besonders bevorzugt 1 bis 4 bar und insbesondere bevorzugt 1,1 bis 3 bar.

Bei den entsprechenden Drücken beträgt die Temperatur am Kopf der Rektifikationskolonne im Allgemeinen im Bereich von 50 bis 80°C, bevorzugt 55 bis 75°C und besonders bevorzugt 60 bis 70°C.

Die am Kopf der Rektifikationskolonne abgezogenen gasförmige Strom wird im Allgemeinen über einen Kondensator geleitet.

Der Kondensator wird bevorzugt bei einer Temperatur im Bereich von 10 bis 50°C, bevorzugt 20 bis 45°C und insbesondere bevorzugt 30 bis 40°C betrieben.

Als Kondensator können beispielsweise Kondensatoren mit Kühlschlange oder Wendelrohr, Doppelrohrkühler, Plattenwärmetauscher sowie Rohrbündelwärmetauscher eingesetzt werden.

Im Kondensator fällt in der Regel ein Kondensat an, welches überwiegend Methanol enthält. Vorzugsweise wird das am Kondensator anfallende Kondensat zu mehr als 50 Vol.-%, bevorzugt zu mehr als 65 Vol.-% und ganz besonders bevorzugt zu mehr als 80 Vol.%, in den Kopf der Rektifikationskolonne als Rücklauf zurückgeführt.

Das nicht zurückgeführte Kondensat kann aus dem Verfahren ausgeschleust werden und wieder als Inhibitor zur Verhinderung der Methanhydratbildung im Roherdgas eingesetzt werden.

Am Sumpf der Rektifikationskolonne wird in der Regel ein Sumpfstrom abgezogen, die überwiegend Wasser enthält.

Der Sumpfstrom aus Schritt e) enthält bevorzugt Methanol im Bereich von 10 wppm bis 5 wt%, besonders bevorzugt 100 wppm bis 3 wt% und ganz besonders bevorzugt 200 wppm bis 1 wt% Methanol.

### Rückführung des Sumpfstroms des Destillationsschritt e):

Erfindungsgemäß wird zumindest ein Teil des Sumpfstroms aus dem Destillationsschritt e) in den Regenerator, der in Schritt b) verwendet wird, zurückgeführt.

Bevorzugt werden 50 bis 100 Vol.-%, besonders bevorzugt 70 bis 100 Vol:-% und ganz besonders bevorzugt 90 bis 100 Vol.-% des Sumpfstroms aus dem Destillationsschritt e) in den Regenerator zurückgeführt. In einer bevorzugten Ausführungsform wird der Sumpfstrom aus dem Destillationsschritt e) vollständig (100 Vol.%) in den Regenerator zurückgeführt. Dadurch kann die Zuführung von Frischwasser zur Aufrechterhaltung der Wasserbilanz im Gesamtprozess verringert werden.

Weist der Regenerator keine zusätzliche Rückwaschzone auf, so wird der Sumpfstrom aus dem Destillationsschritt e) vorzugsweise in den oberen Bereich oder oberhalb der Regenerationszone über eine Zulaufstelle zurückgeführt.

Weist der Regenerator eine zusätzliche Rückwaschzone auf, so wird der Sumpfstrom aus dem Destillationsschritt e) vorzugsweise in den oberen Bereich oder oberhalb der Rückwaschzone über eine Zulaufstelle zurückgeführt.

Die Einleitung des Sumpfstroms aus Schritt e) in den Regenerator erfolgt vorzugsweise, wie voranstehend beschrieben.

Bevorzugt erfolgt die Einleitung des Sumpfstroms aus Schritt e) als Waschwasser in die in den oberen Bereich oder oberhalb der Regenerationszone, oder wenn eine Rückwaschzone vorhanden ist, in die Rückwaschzone, wie vorangehend beschrieben.

Optional kann zusammen mit dem Sumpfstrom aus Stufe e) zusätzlich Frischwasser in den Regenerator eingeleitet werden. Die Einleitung kann über dieselbe Zulaufstelle erfolgen. Die Einleitung von Wasser kann aber auch über eine getrennte Zulaufstelle erfolgen.

Bevorzugt wird allerdings ausschließlich Kondensat aus Stufe e), ohne Frischwasser, in den Regenerator geführt, wie voranstehend beschrieben.

In einer bevorzugten Ausführungsform wird der Sumpfstrom aus Stufe e) als Heizmedium in einem Wärmetauscher verwendet, bevor der Sumpfstrom aus Schritt e) in den Regenerator zurückgeführt wird. Bevorzugt wird der Sumpfstrom aus Schritt e) in dem Wärmetauscher als Heizmittel genutzt, der das Regenerator-Kopfkondensat aus Stufe d) erwärmt, bevor es in den Destillationsschritt e) geleitet wird. Diese Ausführungsform führt zu einer Einsparung des Energiebedarfs.

### Vorrichtung:

### Die vorliegende Erfindung betrifft zudem eine

Vorrichtung zur Entsäuerung eines Fluidstroms, enthaltend Methanol und mindestens ein saures Gas, gemäß Anspruch 1, umfassend
a) einen Absorber, umfassend eine Absorptionszone, mindestens einen Zulauf für Absorptionsmittel, einen Zulauf für den zu entsäuernden Fluidstrom, einen Flüssigkeitsabzug für das beladene Absorptionsmittel, einen Gasabzug für den entsäuerten Fluidstrom und optional eine Rückwaschzone mit einem Zulauf für Waschmittel;
b) einen Regenerator, umfassend eine Regenerationszone, einen Verdampfer, einen Zulauf für das beladene Absorptionsmittel, einen Flüssigkeitsabzug im Sumpf des Regenerators und einen Gasabzug im Kopfbereich des Regenerators;
c) mindestens einen Kopfkondensator, der mit dem Gasabzug des Regenerators verbunden ist, umfassend einen Gasabzug und einen Kondensatablauf; und
d) eine Destillationskolonne, umfassend einen Kondensator, einen Verdampfer, einen Zulauf für den Kondensatablauf des Kopfkondensators, einen Brüdenabzug im Kopfbereich der Kolonne und einen Flüssigkeitsabzug am Sumpf der Destillationskolonne,
dadurch gekennzeichnet, dass Regenerator einen Zulauf aufweist, der mit dem Flüssigkeitsabzug am Sumpf der Destillationskolonne verbunden ist.

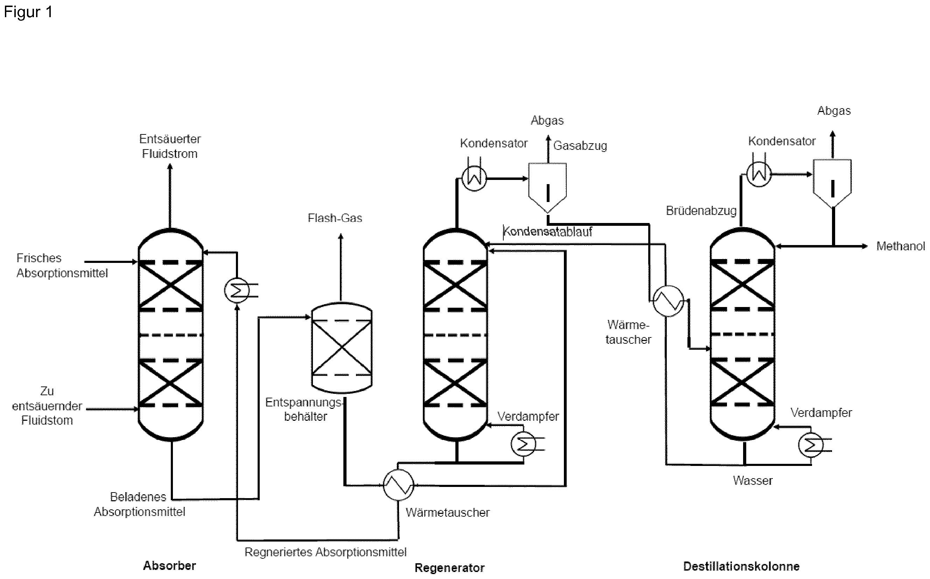

Eine bevorzugte Ausführungsform einer solchen Vorrichtung ist in Figur 1 abgebildet.

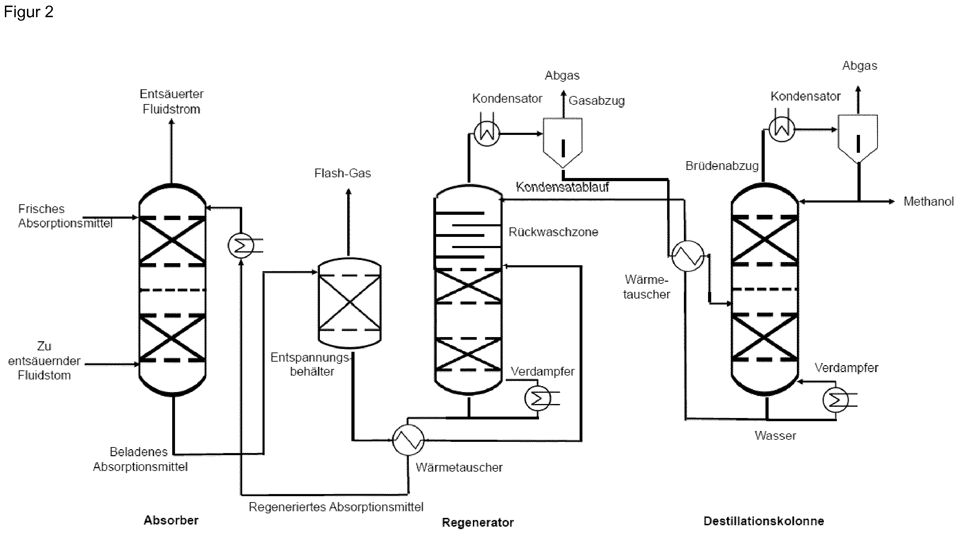

Figur 2 zeigt eine bevorzugte Ausführungsform, in der der Regenerator zusätzlich eine Rückwaschzone umfasst.

Der Absorber ist vorzugsweise als Absorptionskolonne oder Absorptionsturm ausgestaltet.

Die Absorptionskolonne weist bevorzugt eine Absorptionszone auf. Im Rahmen der vorliegenden Erfindung wird als Absorptionszone die Sektion einer Absorptionskolonne angesehen, in der der Fluidstrom in Stoffaustausch-Kontakt mit dem Absorptionsmittel kommt. Zur Verbesserung des Kontakts und Schaffung einer großen Stoffaustauschgrenzfläche enthält die Absorptionszone in bevorzugt Einbauten, z.B. Füllkörper, Packungen und/oder Böden.

Bei einer Füllkörper- bzw. Packungskolonne ist die Absorptionszone vorzugsweise in zwei bis vier übereinander angeordnete Packungsabschnitte unterteilt, die durch Trag- und Halteböden und/oder einen Verteilboden voneinander getrennt werden.

Enthält die Absorptionszone Packungen oder Füllkörper, liegt die Höhe der Packungen/Füllkörper in der Absorptionszone bevorzugt im Bereich von 5 bis 20 m, besonders bevorzugt im Bereich von 6 bis 15 m und ganz besonders bevorzugt im Bereich von 8 bis14 m. Enthält die Absorptionszone Boden, liegt die Bodenanzahl der Absorptionszone vorzugsweise im Bereich von 8 bis 30, besonders bevorzugt 12 bis 25 und ganz besonders bevorzugt 15 bis 23 Böden.

Unterhalb bzw. im unteren Bereich der Absorptionszone befindet sich ein Zulauf für den zu entsäuernden Fluidstrom.

Oberhalb der Absorptionszone, vorzugsweise am Kopf der Absorptionskolonne, befindet sich vorzugsweise eine Abzugsstelle für den entsäuerten Fluidstrom.

Im Bereich der Abzugsstelle für den entsäuerten Fluidstrom ist vorzugsweise ein Demister angebracht.

In einer besonders bevorzugten Ausführungsform befindet sich im oberen Bereich oder oberhalb der Absorptionszone eine Zulaufstelle für Waschmittel.

In einer ganz besonderen Ausführungsform umfasst der Absorber oberhalb der Absorptionszone eine zusätzliche Rückwaschzone.

Die Rückwaschzone ist in der Regel ein als Verstärkungsteil ausgebildeter Abschnitt des Absorbers ausgestaltet, der oberhalb der Zulaufstelle für das Absorptionsmittel angeordnet ist. Vorzugsweise weist die Rückwaschzone Füllkörper, Packungen und/oder Böden auf, um den Kontakt des Fluidstrom mit der Waschflüssigkeit zu intensivieren. Besonders weist die Rückwaschzone Böden, insbesondere Ventil-, Glocken-, Thormann- oder Siebböden auf.

Bevorzugt befindet sich oberhalb der Rückwaschzone eine Zulaufstelle für Waschmittel.

Die Rückwaschzone umfasst bevorzugt 1 bis 7, besonders bevorzugt 2 bis 6, und ganz besonders bevorzugt 3 bis 5 Böden, oder eine Packungshöhe (Füllkörper oder Packungen) von bevorzugt 1 bis 6 m, besonders bevorzugt 2 bis 5 und ganz besonders bevorzugt 2 bis 3 m. Unterhalb der Rückwaschzone kann ein Sammelboden angeordnet sein, auf dem Waschflüssigkeit gesammelt und recycliert werden kann. Die Recyclierung erfolgt dabei in der Regel über eine Pumpe, die die Waschflüssigkeit vom Sammelboden zu der Zulaufstelle pumpt. Bei Recyclierung kann die Waschflüssigkeit mittels eines Wärmetauschers gekühlt werden.

Im unteren Bereich des Absorbers befindet sich vorzugsweise ein Flüssigkeitsabzug für das beladene Absorptionsmittel.

In einer bevorzugten Ausführungsform befindet sich zwischen Flüssigkeitsabzug für das beladene Absorptionsmittel am Absorber und dem Zulauf für das beladene Absorptionsmittel am Regenerator ein Wärmetauscher. Als Heizmittel für diesen Wärmetauscher wird bevorzugt der Rückführstrom des regenerierten Absorptionsmittels vom Sumpf des Regenerators zum Absorber verwendet. In dieser bevorzugten Ausführungsform kann der Energiebedarf des Gesamtverfahrens verringert werden.

Der Flüssigkeitsabzug des Absorbers ist vorzugsweise über einen Wärmetauscher mit dem Regenerator b) über Rohrleitungen verbunden.

Der Wärmetauscher kann als Plattenwärmetauscher oder Rohrbündelwärmetauscher ausgestaltet sein. Als Heizmedium des Wärmetauschers wird bevorzugt der Sumpfstrom aus dem Regenerator b) verwendet.

Der Regenerator umfasst eine Regenerationszone, einen Verdampfer, einen Zulauf für das beladene Absorptionsmittel, einen Flüssigkeitsabzug im Sumpf des Regenerators und eine Abzugsstelle im Kopfbereich des Regenerators

Vorliegend wird als Regenerationszone der Bereich des Regenerators angesehen, mit dem das beladene Absorptionsmittel in Kontakt mit dem Dampf kommt, der vom Sumpfverdampfer erzeugt wird.

Zur Verbesserung des Kontakts und Schaffung einer großen Stoffaustauschgrenzfläche enthält die Regenerationszone bevorzugt Einbauten, z.B. Füllkörper, Packungen und/oder Böden.

Bei einer Füllkörper- bzw. Packungskolonne ist die Regenerationszone vorzugsweise in zwei bis vier übereinander angeordnete Packungsabschnitte unterteilt, die durch Trag- und Halteböden und/oder einen Verteilboden voneinander getrennt werden.

Enthält die Regenerationszone Füllkörper oder Packungen, liegt die Höhe der Füllkörper/Packungen in der Regenerationszone bevorzugt im Bereich von 5 bis 15 m, besonders bevorzugt im Bereich von 6 bis 12 m und ganz besonders bevorzugt im Bereich von 8 bis 12 m. Enthält die Regenerationszone Böden, so liegt die Bodenanzahl der Regenerationszone vorzugsweise im Bereich von 10 bis 30, besonders bevorzugt 15 bis 25 und ganz besonders bevorzugt 17 bis 23 Böden .

Oberhalb oder im oberen Bereich der Regenerationszone befindet sich in der Regel der Zulauf für das beladene Absorptionsmittel.

Der Regenerator umfasst zudem einen Verdampfer.

Der Verdampfer ist bevorzugt ein Aufkocher, Naturumlaufverdampfer oder Zwangsumlaufverdampfer.

Der Verdampfer ist vorzugsweise mit einem Flüssigkeitsabzug am Sumpf des Regenerators über eine Rohleitung verbunden. Als Sumpf wird im Allgemeinen der Bereich unterhalb der Regenerationszone bezeichnet.

Der im Verdampfer erzeugte Dampf-Flüssigkeitsgemisch wird bevorzugt oberhalb des Flüssigkeitsabzugs am Sumpf, aber unterhalb der Regenerationszone in den unteren Bereich des Regenerators über eine Zulaufstelle eingeleitet.

In einer weiteren bevorzugten Ausführungsform wird der Sumpf des Regenerators durch einen Sammelboden unterteilt. Das dort gesammelte Absorptionsmittel wird dem Wärmetauscher zugeführt. Die Dampfeinspeisung und Rückführung der Flüssigkeit erfolgt unterhalb des Sammelbodens.

Der Regenerator umfasst zudem eine Abzugsstelle für das bei der Regeneration entstehenden gasförmigen Strom. Die Abzugsstelle für dem bei der Regeneration entstehenden gasförmigen Strom ist vorzugsweise im Kopfbereich des Regenerators angeordnet. Vorzugsweise befindet sich im Bereich der Abzugsstelle ein Demister.

In einer besonders bevorzugten Ausführungsform umfasst der Regenerator weiterhin eine Rückwaschzone. Die Rückwaschzone ist in der Regel ein als Verstärkungsteil ausgebildeter Abschnitt des Regenerators ausgestaltet, welcher oberhalb der Regenerationszone bzw. der Zulaufstelle für das beladene Absorptionsmittel angeordnet ist.

Zur Verbesserung des Kontakts und Schaffung einer großen Stoffaustauschgrenzfläche enthält die Rückwaschzone bevorzugt Einbauten, z.B. Füllkörper, Packungen und/oder Böden. Insbesondere bevorzugt enthält die Waschsektion Böden, wie Ventil-, Glocken-, Thormannoder Siebböden.

Bevorzugt weist die Rückwaschzone 1 bis 10, besonders bevorzugt 2 bis 7 und, ganz besonders bevorzugt 2 bis 6 Böden auf.

Wenn die Rückwaschzone Packungen oder Füllkörper aufweist, so liegt die Höhe der Einbauten bevorzugt im Bereich von 1 bis 10 m, ganz besonders bevorzugt 2 bis 8 m und insbesondere bevorzugt 3 bis 6 m.

Oberhalb oder im oberen Bereich der Rückwaschzone befindet sich vorzugsweise ein Zulauf für Waschflüssigkeit.

Die Abzugsstelle für den bei der Regeneration entstehenden gasförmigen Strom ist mit einem Kopfkondensator verbunden. Der Kopfkondensator umfasst einen Gasabzug und einen Kondensatablauf.

Als Kondensator können beispielsweise Kondensatoren mit Kühlschlange oder Wendelrohr, Doppelrohrkühler sowie Rohrbündelwärmetauscher eingesetzt werden.

In einer bevorzugten Ausführungsform umfasst die erfindungsgemäße Vorrichtung mindestens zwei Kondensatoren, mit je einem Gasabzug und einem Kondensatablauf, wobei der erste Kondensator vorzugsweise mit Luft oder Kühlwasser gekühlt wird und der zweite Kondensator vorzugsweise mit einem Kühlmittel gekühlt wird. Diese Ausführungsform hat den Vorteil, dass der Gehalt von Methanol im sauren Abgas verringert werden kann, da mehr Methanol auskondensiert werden kann. Dadurch kann die Methanol-Rückgewinnungsquote erhöht werden, beispielsweise auf mehr als 80%, bezogen auf das in das Verfahren eingebrachte Methanol.

Die erfindungsgemäße Vorrichtung umfasst zudem eine Destillationskolonne, umfassend einen Kondensator, einen Verdampfer, einen Zulauf für den Kondensatablauf des Kopfkondensators, einen Brüdenabzug im Kopfbereich der Kolonne und einen Flüssigkeitsabzug am Sumpf der Destillationskolonne.

Die Destillationskolonne ist vorzugsweise als Glockenboden- , Siebbodenkolonne oder vorzugsweise als Kolonne mit Füllkörpern oder strukturierten Packungen ausgestaltet Die Einbauten können in ein oder mehreren Betten vorliegen. Die Rektifikationskolonne enthält bevorzugt 3 bis 25 Trennstufen, besonders bevorzugt 5 bis 20 Trennstufen und ganz besonders bevorzugt 7 bis 15 Trennstufen.

Der Zulauf für den Kondensatablauf des Kopfkondensators befindet sich vorzugsweise in einem räumlichen Bereich zwischen 25% und 95%der Trennstufen der Rektifikationskolonne zugeführt (von unten gezählt), besonders bevorzugt in einem räumlichen Bereich zwischen 40% und 60% der Trennstufen der Rektifikationskolonne. Beispielsweise kann die Zuführung im Bereich Mitte der Trennstufen erfolgen.

Vorzugsweise am Sumpf der Destillationskolonne befindet sich ein Flüssigkeitsabzug.

Der Flüssigkeitsabzug ist vorzugsweise mit einem Verdampfer über eine Rohrleitung verbunden.

Der Verdampfer ist bevorzugt ein Aufkocher, Naturumlaufverdampfer oder Zwangsumlaufverdampfer.

Das im Verdampfer erzeugte Dampf-Flüssigkeitsgemisch wird bevorzugt über eine Dampfeinspeisung in den Sumpf der Destillationskolonne eingeleitet.

Der Brüdenabzug befindet sich vorzugsweise im Kopfbereich der Rektifikationskolonne.

Die bei der Destillation entstehenden Brüden werden über eine Rohrleitung zu einem Kopfkondensator geführt. Der Kopfkondensator umfasst in der Regel einen Wärmetauscher und einen Behälter in dem die Flüssigphase von der Gasphase getrennt werden kann.

Als Kondensator können beispielsweise Kondensatoren mit Kühlschlange oder Wendelrohr, Doppelrohrkühler sowie Rohrbündelwärmetauscher eingesetzt werden.

Im Kondensator fällt in der Regel ein Kondensat an, welches überwiegend Methanol enthält. Vorzugsweise wird das am Kondensator anfallende Kondensat zu mehr als 50 Vol.-%, bevorzugt zu mehr als 65 Vol.-% % und besonders bevorzugt zu mehr als 80 Vol.-%%, in den Kopf der Rektifikationskolonne über eine Rohrleitung zurückgeführt.

Das nicht zurückgeführte Kondensat kann über eine Rohleitung aus dem Verfahren ausgeschleust werden und wieder als Inhibitor zur Verhinderung der Hydratbildung bei niedrigen Temperaturen eingesetzt werden.

Erfindungsgemäß weist der Regenerator einen Zulauf auf, der mit dem Flüssigkeitsabzug am Sumpf der Destillationskolonne verbunden ist.

Weist der Regenerator keine Waschzone auf, so befindet sich die Zulaufstelle bevorzugt oberhalb oder im oberen Bereich der Regenerationszone.

Weist der Regenerator eine Waschzone auf, so befindet sich die Zulaufstelle bevorzugt oberhalb oder im oberen Bereich der Waschzone.

In einer weiteren bevorzugten Ausführungsform ist zwischen dem Flüssigkeitsabzug am Sumpf von Destillationskolonne c) und des Zulaufs am Regenerator ein Wärmetauscher angeordnet. In diesem Wärmetauscher wird der Sumpfaustrag aus Destillationskolonne c) als Heizmittel für den Kondensatablauf aus dem Kopfkondensator des Regenerators genutzt, bevor der Kondensatablauf in die Destillationskolonne c) eingeleitet wird.

In einer besonders bevorzugten Ausführungsform umfasst die erfindungsgemäße Vorrichtung einen Entspannungsbehälter.

Der Entspannungsbehälter ist mit dem Absorber a) und dem Regenerator b) verbunden, Bevorzugt ist der Flüssigkeitsabzug aus dem Sumpf des Absorbers über ein Ventil mit dem Entspannungsbehälter verbunden.

In dem Entspannungsbehälter wird zumindest ein Teil der sauren Gase des beladenen Absorptionsmittels in die Gasphase überführt und von der nicht verdampften Flüssigkeitsphase getrennt.

Die Gasphase wird in der Regel im oberen Bereich des Entspannungsbehälters als saures Abgas abgezogen und aus dem Verfahren ausgeschleust.

Im unteren Bereich des Entspannungsbehälters befindet sich vorzugsweise ein Flüssigkeitsabzug für die nicht verdampfte Flüssigphase, der über eine Rohrleitung mit dem Regenerator verbunden ist. Vorzugsweise befindet sich die Zulaufstelle für die Flüssigphase aus dem Entspannungsbehälter oberhalb der Regenerationszone.

Besonders bevorzugt ist zwischen dem Entspannungsbehälter und der Regenerator ein Wärmetauscher angeordnet, der mit dem Sumpfaustrag des Regenerators als Heizmittel betrieben wird.

### Verwendung der Vorrichtung:

Die vorliegende Erfindung betrifft weiterhin die Verwendung der erfindungsgemäßen Vorrichtung und einer seiner bevorzugten Ausgestaltungsformen, oder Kombinationen der bevorzugten Ausgestaltungsformen, zur Herstellung von entsäuertem Erdgas mit einem niedrigen Methanolgehalt. Eine solche Vorrichtung kann insbesondere in Ländern und Regionen verwendet werden, in den die klimatischen Gegebenheiten eine Inhibierung der Hydratbildung mit Methanol erfordern.

Die Verwendung der Vorrichtung kann gemäß den zuvor beschriebenen Verfahrensbedingungen erfolgen.

### Vorteile:

Die erfindungsgemäße Vorrichtung, deren erfindungsgemäße Verwendung sowie das erfindungsgemäße Verfahren, in denen der Sumpfstrom aus Stufe e) in den Regenerator zurückgeführt wird, hat gegenüber der aus dem Stand der Technik bekannten Einleitung in den Absorber den Vorteil, dass der Sumpfstrom aus Stufe e) einen höheren Rest-Methanolgehalt aufweisen kann.

Im Destillationsschritt e) kann gegenüber dem Stand der Technik die Rektifikationskolonne mit weniger Trennstufen gebaut werden oder mit geringer Verdampferleistung betrieben werden. Hierdurch können Betriebskosten und/oder Investitionskosten verringert werden.

Das erfindungsgemäße Verfahren hat zudem den Vorteil, dass das als Inhibitor zugeführte Methanol mit einer hohen Quote, vorzugsweise mehr als 80%, bezogen auf das zugeführte Methanol, zurückgewonnen werden kann. Dadurch werden die Betriebskosten des Gesamtverfahrens weiter verringert.

Im Rahmen der Erfindung wurde überraschender Weise gefunden, dass sich bei einer erfindungsgemäßen Einleitung des Sumpfstroms aus Stufe e) in den Regenerator nicht oder nur im geringen Maße im regenerierten Absorptionsmittel absorbiert wird.

Das regenerierte Absorptionsmittel weist somit einen so geringen Gehalt an Methanol aus, so dass das Methanol, welches in Schritt a) mit dem zu entsäuernden Fluidstrom eingeleitet wird, nahezu vollständig entfernt werden kann. So können Rückführströme optimal genutzt werden und die Zufuhr von Bestandteilen des Absorptionsmittels zum Ausgleich von Verlusten verringert werden.

Die Entfernung des Methanols aus dem entsäuerten Fluidstrom hat den Vorteil, dass die bei der Anwesenheit von Methanol auftretenden Probleme in nachfolgenden Aufarbeitungsschritten verringert werden können.

Ist die nachfolgende Entwässerung beispielsweise als PSA bzw. TSA ausgestaltet, in der ein Molsieb als festes Trocknungsmittel eingesetzt wird, so ein 3 A Molsieb anstelle eines 4 A Molsiebs verwendet werden, da die Adsorptions von Wasser nicht mit der Adsorption von Methanol konkurriert. Dadurch werden auch nicht weitere Komponenten, wie H₂S und Ethan absorbiert. Dies ermöglicht eine kleinere Auslegung der Entwässerungsstufe. Bei der Regeneration der Molsiebs durch Temperaturerhöhung führt ein geringer Methanolgehalt zu weniger Verkokung des Molsiebes.

Ist die Glykoltrocknung beispielsweise als sogenannte TEG-Einheit (TEG=Triethylenglykol) ausgestaltet, so erschwert die Anwesenheit von Methanol die Regeneration von TEG. Diese Nachteile können durch das erfindungsmäße Verfahren bzw. die erfindungsgemäße Vorrichtung und deren Verwendung, ebenfalls verringert werden.

In beiden Fällen (PSA/TSA und Glykoltrocknung) wird die Verschleppung von Methanol über mehrere Anlagenteile verringert. Insbesondere enthält das bei der Regeneration des Trocknungsmittels abgetrennte Wasser weniger Methanol, wodurch ggf. der Aufwand einer weiteren Aufarbeitung des abgetrennten Wassers verringert oder vermieden werden kann.

### Beispiele:

Die Erfindung wird anhand der folgenden Beispiele erläutert:
Die Beispiele beruhen auf Rechnungen, die mittels eines Simulationsmodells durchgeführt wurden. Zur Beschreibung der Phasengleichgewichte wurde ein Modell von Pitzer (K. S. Pitzer, Activity Coefficients in Electrolyte Solutions 2nd ed., CRC Press, 1991, Chapter 3, Ion Interaction Approach: Theory) verwendet. Die Simulation der Absorptionsvorgänge wird mittels eines stoffübergangsbasierten Ansatzes beschrieben; Details dazu sind bei Asprion (Asprion, N.: Nonequilibrium Rate-Based Simulation of Reactive Systems: Simulation Model, Heat Transfer, and Influence of Film Discretization, Ind. Eng. Chem. Res. (2006) 45(6), 2054-2069) beschrieben. Die Auslegung der Destillationskolonne erfolgte mittels eines thermodynamischen Modells basierend auf dem NRTL-Ansatz zur Beschreibung des Dampf-Flüssig-Gleichgewichts von Wasser Methanol.

All die im vorliegenden Dokument angegebenen Drücke sind Absolutdrücke.

Im vorliegenden Dokument steht "Nm3/h" für den in Normkubikmetern pro Stunde angegebenen Volumenstrom. Der Normkubikmeter ist bezogen auf eine Temperatur von 273,15 K und einen Druck von 1,01325 bar. Alle Angaben in der Einheit "Vol.-%" be- ziehen sich ebenfalls auf diese Bedingungen.

Für alle Beispiele wurde folgende Prozessbedingungen angenommen:
- Feedgas: 1,0 vol% CO₂, 520 vppm Methanol, Rest Kohlenwasserstoffe (CH₄, C₂H₆) bei einer Temperatur von 26 °C und einem Druck von 63,5 bar.
- Absorptionsmittel:
   Eine Aminlösung bestehend aus Piperazin und Methyldiethanolamin mit einem Gesamtamingehalt von 40 Gew%. Pro 1000 Nm3/hr Feedgas wird 0,24 m3/h regeneriertes Absorptionsmittel eingesetzt. Das regenerierte Absorptionsmittel hat eine Temperatur von 35 °C.
- Die Absorptionskolonne besitzt als Einbauten Füllkörper mit einer Gesamtschütthöhe von 14 m.
- Im Regenerator werden für die Regenerationszone ebenfalls Füllkörper verwendet mit einer Schütthöhe von 10 m. Der Regenerator wird bei einem Druck von 1,5 bar betrieben.
- Die Destillationskolonne wird bei einem Druck von 1,25 bar betrieben. In der Simulation wird die Kolonne mittels 10 theoretischen Stufen abgebildet. Der Feedzulauf erfolgt auf der 6. Stufe von unten gezählt.

Alle Beispiele haben die identische Trennaufgabe zu erfüllen, die in den folgenden Spezifikationen definiert wurde:
- Der Methanolgehalt des entsäuerten Fluidstroms (Erdgas), der am Kopf des Absorbers erhalten wird, soll einen Wert von 1 vppm nicht überschreiten.
- Der CO₂-Gehalt des entsäuerten Fluidstroms (Erdgas), der am Kopf des Absorbers erhalten wird, soll einen Wert von 15 vppm nicht überschreiten.
- Das am Kopf der Methanoldestillation zurückgewonnene Methanol soll eine Reinheit von größer 96 wt% aufweisen.

Im Folgenden wird nur der Unterschied bzgl. Destillationsschrittes e) diskutiert, da sich in den Absorptions-, Regenerations-, Kondensations- und Rückführschritten a) bis d) keine wesentlichen Unterschiede ergeben hinsichtlich der wesentlichen Betriebsparameter.

### Beispiel 1:

Man simuliert ein Verfahren in einer Anlage gemäß Figur 1. Das Verfahren besteht aus einer Absorptionskolonne, einem Entspannungsbehälter (HP-Flash), Regenerator mit Verdampfer und Kopfkondensator. Der im Kopfkondensator auskondensierte Flüssigkeitsstrom (Methanol + Wasser) wird über einen Wärmetauscher in einer weiteren Kolonne zugeführt. Hier wird destillativ Methanol (Kopfprodukt) und Wasser (Sumpfprodukt) getrennt. Das Sumpfprodukt wird zurück auf den Kopf des Regenerators gegeben.

Das Rücklaufverhältnis v der Destillationskolonne beträgt 7.5

Die Methanolrückgewinnung beträgt 90% bezogen auf die in Stufe a) eingeleiteten Fluidstrom vorhandene Menge.

### Beispiel 2:

Man simuliert ein Verfahren in einer Anlage gemäß Figur 2. Die Konfiguration entspricht weitestgehend Beispiel 1 mit dem Unterschied, dass im Regenerator zusätzlich eine Rückwaschsektion mit drei Böden berücksichtigt wurde.

Alle weiteren Komponenten als auch die Prozessbedingungen sind unverändert im Vergleich zu Beispiel 1. Die Berücksichtigung der Rückwaschzone im Regenerator führt bei gleicher zugeführten Verdampferleistung für den Regenerator als auch die Methanoldestillation ebenfalls zu einer Methanolrückgewinnung von 90 %. Durch die Rückwaschsektion kann der Amingehalt im Kondensator des Regenerators und somit im Destillationsteil reduziert werden, neben den im Gas gelösten Aminen wird auch möglicher Tropfenmitriss durch die Rückwaschsektion reduziert.

### Vergleichsbeispiel 1:

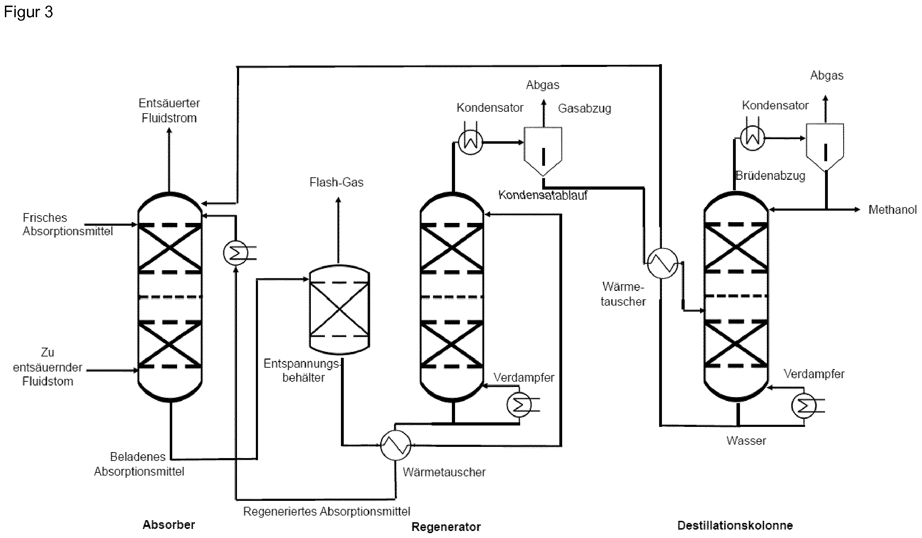

Basierend auf der Patentanmeldung RU2602908 wurde eine weitere Simulation für ein Verfahren gemäß Figur 3 erstellt. Der zu reinigenden Roherdgasstrom ist identisch zu den beiden zuvor gezeigten Beispielen, auch wurden die Apparatgrößen und eingesetzten Verdampfleistungen (Regenerator und Destillation) konstant gehalten. Der wesentliche Unterschied liegt in der Rückführung des Wassers aus der Methanoldestillation direkt auf den Kopf der Absorptionskolonne und nicht wie zuvor auf den Kopf des Regenerators. Bei gleicher Stufenanzahl und Verdampferleistung in der Methanolkolonne kann mit dieser Konfiguration der gewünschte Methanolgehalt (< 1 vppm) im gereinigten Erdgas nicht mehr erreicht werden. Der Restmethanolgehalt beträgt 27 vppm. D.h. um die gleiche Abtrennung an Methanol zu erreichen, müsste eine Destillationskolonne mit mehr Trennstufen und/oder höherer Verdampfleistung eingesetzt werden.

## Patentansprüche

1. Verfahren zur Herstellung eines entsäuerten Fluidstroms aus einem Fluidstrom, enthaltend Methanol und mindestens ein saures Gas, umfassend
a) einen Absorptionsschritt, bei dem man den Fluidstrom mit einem Absorptionsmittel in einem Absorber in Kontakt bringt, wobei man ein mit Methanol und sauren Gasen beladenes Absorptionsmittel und einen zumindest teilweise entsäuerten Fluidstrom erhält;
b) einen Regenerationsschritt, bei dem man zumindest ein Teil des aus Schritt a) erhaltenen, beladenen Absorptionsmittel in einem Regenerator regeneriert, wobei man ein zumindest teilweise regeneriertes Absorptionsmittel und einen gasförmigen Strom enthaltend Methanol, Wasser und mindestens ein saures Gas erhält;
c) einen Rückführschritt, bei dem man zumindest einen Teilstrom des regenerierten Absorptionsmittels aus Schritt b) in den Absorptionsschritt a) zurückführt,
d) einem Kondensationsschritt, bei dem man ein Kondensat, enthaltend Methanol und Wasser, aus dem gasförmigen Stroms aus Schritt b) auskondensiert;
e) einem Destillationsschritt, bei dem man zumindest einen Teil des Kondensats aus Schritt d) in eine Destillationskolonne leitet, wobei man einen Kopfstrom, enthaltend Methanol, und einen Sumpfstrom, enthaltend Wasser, erhält;
**dadurch gekennzeichnet, dass** man zumindest einen Teil des Sumpfstroms aus Schritt e) in den Regenerator zurückführt.

2. Verfahren nach Anspruch 1, **dadurch gekennzeichnet, dass** der in das Verfahren eingesetzte Fluidstrom Methanol im Bereich von 50 bis 5000 vppm enthält.

3. Verfahren nach mindestens einem der Ansprüche 1 bis 2, **dadurch gekennzeichnet, dass** der in das Verfahren eingesetzte Fluidstrom Kohlenwasserstoffe enthält und die in das Verfahren eingesetzten Kohlenwasserstoffe im Bereich von 90 bis 99,5 Vol.% Methan enthalten; und/oder dass der in das Verfahren eingesetzte Fluidstrom saure Gase im Bereich von 0,01 bis 40 Vol.% enthält.

4. Verfahren nach mindestens einem der Ansprüche 1 bis 3, **dadurch gekennzeichnet, dass** zwischen Absorptionsschritt a) und Regenerationsschritt b) ein zusätzlicher Entspannungsschritt durchgeführt wird.

5. Verfahren nach mindestens einem der Ansprüche 1 bis 4, **dadurch gekennzeichnet, dass** 50 bis 100 Vol.-% des Sumpfstroms aus Schritt e) in den Regenerator zurückgeführt werden.

6. Verfahren nach mindestens einem der Ansprüche 1 bis 5, **dadurch gekennzeichnet, dass** der zumindest ein Teil des Sumpfstrom aus Schritt e) in den oberen Bereich oder oberhalb der Regenerationszone des Regenerators in Schritt b) zurückgeführt wird; oder, dass der Regenerator in Schritt b) eine Regenerationszone und eine Rückwaschzone umfasst und das beladene Absorptionsmittel zwischen Regenerationszone und Rückwaschzone eingeleitet wird und zumindest ein Teil des Sumpfstroms aus Schritt e) in den oberen Bereich oder oberhalb der Rückwaschzone zurückgeführt wird.

7. Verfahren nach mindestens einem der Ansprüche 1 bis 6, **dadurch gekennzeichnet, dass** die der Druck am Kopf der Destillationskolonne in Schritt e) im Bereich von 1 bis 3 bar beträgt.

8. Verfahren nach mindestens einem der Ansprüche 1 bis 7, **dadurch gekennzeichnet**, die Destillationskolonne in Schritt e) 3 bis 25 Trennstufen aufweist.

9. Verfahren nach mindestens einem der Ansprüche 1 bis 8, **dadurch gekennzeichnet, dass** das in Schritt e) am Kondensator der Destillationskolonne anfallende Destillat zu mehr als 50 Vol.-% als Rücklauf in die Destillationskolonne zurückgeführt wird.

10. Verfahren nach mindestens einem der Ansprüche 1 bis 9, **dadurch gekennzeichnet, dass** der Kondensationsschritt d) mindestens zwei Kondensatoren umfasst, wobei der erste Kondensator mit Luft oder Kühlwasser gekühlt wird und der zweite Kondensator mit einem Kühlmittel gekühlt wird.

11. Verfahren nach mindestens einem der Ansprüche 6 bis 10, **dadurch gekennzeichnet, dass** die Rückwaschzone des Regenerators Böden oder Füllkörper oder Packungen aufweist und die Anzahl der Böden im Bereich von 1 bis 10 Böden liegt bzw. die Höhe der Füllkörper/Packungen im Bereich von 1 bis 10 m liegt.

12. Verfahren nach mindestens einem der Ansprüche 1 bis 11, **dadurch gekennzeichnet, dass** das Absorptionsmittel ein wässriges Absorptionsmittel ist.

13. Verfahren nach mindestens einem der Ansprüche 1 bis 12, **dadurch gekennzeichnet, dass** am entsäuerten Fluidstrom aus Schritt a) ein oder mehrere der folgenden Aufarbeitungsschritte durchgeführt werden:
aa) Wasserentfernung;
bb) Entfernung von Quecksilber;
cc) Entfernung von Stickstoff;
dd) Entfernung von Erdgaskondensaten; und/oder
ee) Verflüssigung.

14. Vorrichtung zur Entsäuerung eines Fluidstroms, enthaltend Methanol und mindestens ein saures Gas, gemäß Anspruch 1, umfassend
a) einen Absorber, umfassend eine Absorptionszone, mindestens einen Zulauf für Absorptionsmittel, einen Zulauf für den zu entsäuernden Fluidstrom, einen Flüssigkeitsabzug für das beladene Absorptionsmittel, eine Abzugsstelle für den entsäuerten Fluidstrom und optional eine Rückwaschzone mit einem Zulauf für Waschmittel;
b) einen Regenerator, umfassend eine Regenerationszone, einen Verdampfer, einen Zulauf für das beladene Absorptionsmittel, einen Flüssigkeitsabzug im Sumpf des Regenerators und einen Gasabzug im Kopfbereich des Regenerators;
c) mindestens einen Kopfkondensator, der mit dem Gasabzug des Regenerators verbunden ist, umfassend einen Gasabzug und einen Kondensatablauf; und
d) eine Destillationskolonne, umfassend einen Kondensator, einen Verdampfer, einen Zulauf für den Kondensatablauf des Kopfkondensators, einen Brüdenabzug im Kopfbereich der Kolonne und einen Flüssigkeitsabzug am Sumpf der Destillationskolonne,
**dadurch gekennzeichnet, dass** Regenerator einen Zulauf aufweist, der mit dem Flüssigkeitsabzug am Sumpf der Destillationskolonne verbunden ist.

15. Verwendung einer Vorrichtung gemäß Anspruch 14 zur Herstellung von entsäuertem Erdgas mit einem niedrigen Methanolgehalt

## Claims

1. A process for producing a deacidified fluid stream from a fluid stream comprising methanol and at least one acid gas, comprising
a) an absorption step in which the fluid stream is contacted with an absorbent in an absorber to obtain an absorbent laden with methanol and acid gases and an at least partly deacidified fluid stream;
b) a regeneration step in which at least a portion of the laden absorbent obtained from step a) is regenerated in a regenerator to obtain an at least partly regenerated absorbent and a gaseous stream comprising methanol, water and at least one acid gas;
c) a recycling step in which at least a substream of the regenerated absorbent from step b) is recycled into the absorption step a);
d) a condensation step in which a condensate comprising methanol and water is condensed out of the gaseous stream from step b);
e) a distillation step in which at least a portion of the condensate from step d) is guided into a distillation column to obtain a top stream comprising methanol and a bottom stream comprising water;
which comprises recycling at least a portion of the bottom stream from step e) into the regenerator.

2. The process according to claim 1, wherein the fluid stream introduced into the process comprises methanol in the range from 50 to 5000 ppmv.

3. The process according to at least one of claims 1 and 2, wherein the fluid stream introduced into the process comprises hydrocarbons and the hydrocarbons introduced into the process comprise in the range from 90% to 99.5% by volume of methane; and/or wherein the fluid stream introduced into the process comprises acid gases in the range from 0.01% to 40% by volume.

4. The process according to at least one of claims 1 to 3, wherein an additional expansion step is conducted between absorption step a) and regeneration step b).

5. The process according to at least one of claims 1 to 4, wherein 50% to 100% by volume of the bottom stream from step e) is recycled into the regenerator.

6. The process according to at least one of claims 1 to 5, wherein the at least a portion of the bottom stream from step e) is recycled into the upper region or above the regeneration zone of the regenerator in step b) ; or wherein the regenerator in step b) comprises a regeneration zone and a rescrubbing zone and the laden absorbent is introduced between regeneration zone and rescrubbing zone and at least a portion of the bottom stream from step e) is recycled into the upper region or above the rescrubbing zone.

7. The process according to at least one of claims 1 to 6, wherein the pressure at the top of the distillation column in step e) is in the range from 1 to 3 bar.

8. The process according to at least one of claims 1 to 7, wherein the distillation column in step e) has 3 to 25 plates.

9. The process according to at least one of claims 1 to 8, wherein the distillate obtained in the condenser of the distillation column in step e) is recycled to an extent of more than 50% by volume as reflux to the distillation column.

10. The process according to at least one of claims 1 to 9, wherein the condensation step d) comprises at least two condensers, the first condenser being cooled with air or cooling water and the second condenser being cooled with a coolant.

11. The process according to at least one of claims 6 to 10, wherein the rescrubbing zone of the regenerator has trays or random packings or structured packings, and the number of trays is in the range from 1 to 10 trays or the height of the random packings/structured packings is in the range from 1 to 10 m.

12. The process according to at least one of claims 1 to 11, wherein the absorbent is an aqueous absorbent.

13. The process according to at least one of claims 1 to 12, wherein one or more of the following workup steps are performed on the deacidified fluid stream from step a) :
aa) dewatering;
bb) removal of mercury;
cc) removal of nitrogen;
dd) removal of natural gas condensates; and/or
ee) liquefaction.

14. An apparatus for deacidifying a fluid stream, comprising methanol and at least one acid gas, according to claim 1, comprising
a) an absorber comprising an absorption zone, at least one feed for absorbent, a feed for the fluid stream to be deacidified, a liquid draw for the laden absorbent, a draw point for the deacidified fluid stream and optionally a rescrubbing zone with a feed for scrubbing agent;
b) a regenerator comprising a regeneration zone, an evaporator, a feed for the laden absorbent, a liquid draw in the bottom of the regenerator and a gas draw in the top region of the regenerator;
c) at least one top condenser connected to the gas draw of the regenerator, comprising a gas draw and a condensate outlet; and
d) a distillation column comprising a condenser, an evaporator, a feed for the condensate outlet of the top condenser, a vapor draw in the top region of the column and a liquid draw at the bottom of the distillation column,
wherein the regenerator has a feed connected to the liquid draw at the bottom of the distillation column.

15. The use of an apparatus according to claim 14 for production of deacidified natural gas having a low methanol content.

## Revendications

1. Procédé de production d'un courant de fluide désacidifié à partir d'un courant de fluide, contenant du méthanol et au moins un gaz acide, comprenant :
a) une étape d'absorption, dans laquelle le courant de fluide est mis en contact avec un agent d'absorption dans un absorbeur, un agent d'absorption chargé en méthanol et en gaz acides et un courant de fluide au moins partiellement désacidifié étant obtenus ;
b) une étape de régénération, dans laquelle au moins une partie de l'agent d'absorption chargé obtenu à l'étape a) est régénérée dans un régénérateur, un agent d'absorption au moins partiellement régénéré et un courant gazeux contenant du méthanol, de l'eau et au moins un gaz acide étant obtenus ;
c) une étape de recyclage, dans laquelle au moins un courant partiel de l'agent d'absorption régénéré de l'étape b) est recyclé dans l'étape d'absorption a),
d) une étape de condensation, dans laquelle un condensat, contenant du méthanol et de l'eau, est condensé à partir du courant gazeux de l'étape b) ;
e) une étape de distillation, dans laquelle au moins une partie du condensat de l'étape d) est conduite dans une colonne de distillation, un courant de tête contenant du méthanol et un courant de fond contenant de l'eau étant obtenus ;
**caractérisé en ce qu'**au moins une partie du courant de fond de l'étape e) est recyclée dans le régénérateur.

2. Procédé selon la revendication 1, **caractérisé en ce que** le courant de fluide utilisé dans le procédé contient du méthanol dans la plage allant de 50 à 5 000 ppm en volume.

3. Procédé selon au moins l'une quelconque des revendications 1 à 2, **caractérisé en ce que** le courant de fluide utilisé dans le procédé contient des hydrocarbures et les hydrocarbures utilisés dans le procédé contiennent dans la plage allant de 90 à 99,5 % en volume de méthane ;
et/ou **en ce que** le courant de fluide utilisé dans le procédé contient des gaz acides dans la plage allant de 0,01 à 40 % en volume.

4. Procédé selon au moins l'une quelconque des revendications 1 à 3, **caractérisé en ce qu'**une étape de détente supplémentaire est effectuée entre l'étape d'absorption a) et l'étape de régénération b).

5. Procédé selon au moins l'une quelconque des revendications 1 à 4, **caractérisé en ce que** 50 à 100 % en volume du courant de fond de l'étape e) est recyclé dans le régénérateur.

6. Procédé selon au moins l'une quelconque des revendications 1 à 5, **caractérisé en ce qu'**au moins une partie du courant de fond de l'étape e) est recyclée dans la zone supérieure ou au-dessus de la zone de régénération du régénérateur dans l'étape b) ; ou **en ce que** le régénérateur dans l'étape b) comprend une zone de régénération et une zone de lavage à contre-courant, et l'agent d'absorption chargé est introduit entre la zone de régénération et la zone de lavage à contre-courant, et au moins une partie du courant de fond de l'étape e) est recyclée dans la zone supérieure ou au-dessus de la zone de lavage à contre-courant.

7. Procédé selon au moins l'une quelconque des revendications 1 à 6, **caractérisé en ce que** la pression à la tête de la colonne de distillation à l'étape e) est dans la plage allant de 1 à 3 bars.

8. Procédé selon au moins l'une quelconque des revendications 1 à 7, **caractérisé en ce que** la colonne de distillation à l'étape e) comprend 3 à 25 étages de séparation.

9. Procédé selon au moins l'une quelconque des revendications 1 à 8, **caractérisé en ce que** le distillat formé à l'étape e) dans le condenseur de la colonne de distillation est recyclé à plus de 50 % sous forme de reflux dans la colonne de distillation.

10. Procédé selon au moins l'une quelconque des revendications 1 à 9, **caractérisé en ce que** l'étape de condensation d) comprend au moins deux condenseurs, le premier condenseur étant refroidi par de l'air ou de l'eau de refroidissement et le deuxième condenseur étant refroidi par un agent de refroidissement.

11. Procédé selon au moins l'une quelconque des revendications 6 à 10, **caractérisé en ce que** la zone de lavage à contre-courant du régénérateur comprend des plateaux ou des corps de remplissage ou des garnissages et le nombre de plateaux se situe dans la plage allant de 1 à 10 plateaux ou la hauteur des corps de remplissage/garnissages se situe dans la plage allant de 1 à 10 m.

12. Procédé selon au moins l'une quelconque des revendications 1 à 11, **caractérisé en ce que** l'agent d'absorption est un agent d'absorption aqueux.

13. Procédé selon au moins l'une quelconque des revendications 1 à 12, **caractérisé en ce qu'**une ou plusieurs des étapes de traitement suivantes sont effectuées sur le courant de fluide désacidifié de l'étape a) :
aa) une élimination d'eau ;
bb) une élimination de mercure ;
cc) une élimination d'azote ;
dd) une élimination de condensats de gaz naturel ; et/ou ee) une fluidification.

14. Dispositif pour la désacidification d'un courant de fluide, contenant du méthanol et au moins un gaz acide, selon la revendication 1, comprenant :
a) un absorbeur, comprenant une zone d'absorption, au moins une entrée pour l'agent d'absorption, une entrée pour le courant de fluide à désacidifier, une évacuation de liquide pour l'agent d'absorption chargé, un point d'évacuation pour le courant de fluide désacidifié et, facultativement, une zone de lavage à contre-courant avec une entrée pour l'agent de lavage ;
b) un régénérateur, comprenant une zone de régénération, un évaporateur, une entrée pour l'agent d'absorption chargé, une évacuation de liquide dans le fond du régénérateur et une évacuation de gaz dans la zone de tête du régénérateur ;
c) au moins un condenseur de tête, qui est connecté à l'évacuation de gaz du régénérateur, comprenant une évacuation de gaz et une évacuation de condensat ; et
d) une colonne de distillation, comprenant un condenseur, un évaporateur, une entrée pour l'évacuation de condensat du condenseur de tête, une évacuation de vapeur dans la zone de tête de la colonne et une évacuation de liquide au fond de la colonne de distillation,
**caractérisé en ce que** le régénérateur présente une entrée, qui est connectée à l'évacuation de liquide au fond de la colonne de distillation.

15. Utilisation d'un dispositif selon la revendication 14 pour la production de gaz naturel désacidifié ayant une faible teneur en méthanol.
